# FASCICULE DE BREVET EUROPEEN

(11) **EP 4 076 996 B1**
(45) Date de publication et mention de la délivrance du brevet: **03.07.2024**
(21) Numéro de dépôt: 20797824.8
(22) Date de dépôt: 09.10.2020
(51) Int. Cl.: B60C 15/04, B60C 9/00, B60C 13/00, B60C 15/06

(54) **PNEUMATIQUE COMPRENANT UN BOURRELET PERFECTIONNÉ**
REIFEN MIT VERBESSERTEM WULST
TYRE COMPRISING AN IMPROVED BEAD

(30) Priorité: 19.12.2019 FR 1914981
(43) Date de publication de la demande: 26.10.2022
(73) Titulaire: COMPAGNIE GENERALE DES ETABLISSEMENTS MICHELIN, 63000 Clermont-Ferrand (FR)
(72) Inventeur: FRAYSSE, Patrice, 63040 CLERMONT-FERRAND Cedex 9 (FR); CHAMBRIARD, François, 63040 CLERMONT-FERRAND Cedex 9 (FR)
(74) Mandataire: M.F.P. Michelin
(86) Numéro de dépôt international: PCT/FR2020/051790
(87) Numéro de publication internationale: WO 2021/123522

(56) Documents cités:
- WO-A1-00/38906
- WO-A1-02/096631
- WO-A1-03/035378
- FR-A1- 2 771 050
- JP-A- 2004 203 170
- US-A- 5 660 656

## Description

La présente invention est relative à un pneumatique et à un procédé permettant de fabriquer un tel pneumatique.

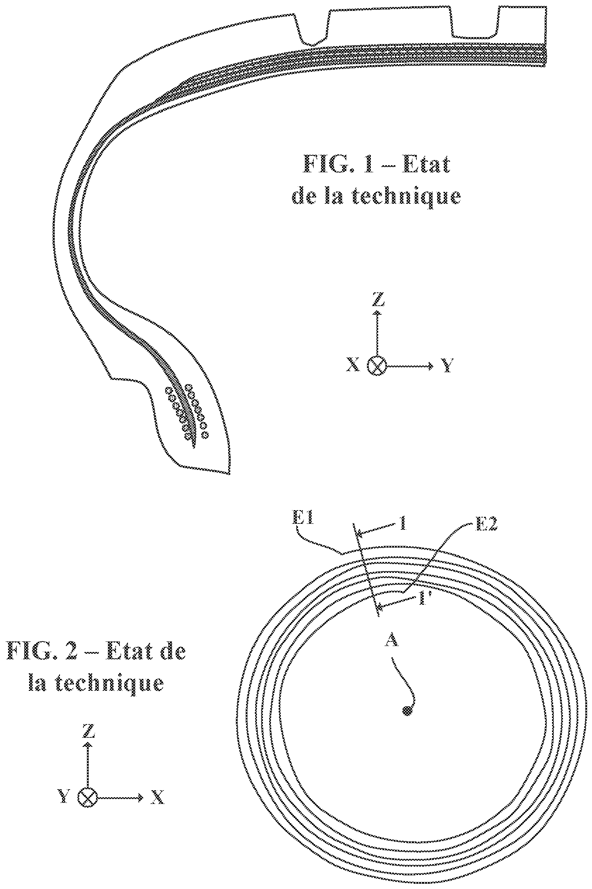

On connait de l'état de la technique un pneumatique, dont on a représenté une vue dans un plan de coupe méridien sur la figure 1, de forme sensiblement torique autour d'un axe de révolution sensiblement confondu avec l'axe de rotation du pneumatique. Le pneumatique comprend un sommet, deux flancs, deux bourrelets, chaque flanc reliant chaque bourrelet au sommet. Le pneumatique comprend également une armature de carcasse ancrée dans chaque bourrelet et s'étendant dans chaque flanc et radialement intérieurement au sommet.

Chaque bourrelet comprend un élément de renforcement filaire continu axialement intérieur agencé axialement à l'intérieur de l'armature de carcasse et un élément de renforcement filaire continu axialement extérieur agencé axialement à l'extérieur de l'armature de carcasse.

Comme illustré sur la figure 2, chaque élément de renforcement filaire continu axialement intérieur et extérieur comprend plusieurs tours circonférentiels, autour de l'axe de révolution, superposés les uns sur les autres. Chaque élément de renforcement filaire continu comprend une extrémité libre radialement extérieure E1 et une extrémité libre radialement intérieure E2.

Afin d'améliorer l'adhérence sur sol sec, notamment dans le cas d'une utilisation sur circuit, certains utilisateurs de ce pneumatique ont pour habitude de baisser la pression de gonflage du pneumatique, parfois même en-deçà du seuil minimum recommandé par le fabriquant du pneumatique. Dans ces cas d'utilisation conduisant à des sollicitations extrêmes du pneumatique, chaque bourrelet est soumis à des efforts extrêmement élevés, ces efforts étant susceptibles d'entrainer des risques de fissuration aux interfaces entre chaque extrémité libre radialement extérieure E1 et radialement intérieure E2 et chaque matrice élastomérique dans lequel chaque extrémité libre radialement extérieure E1 et radialement intérieure E2 est noyée.

On connait également d'autres pneumatiques des documents WO02/096631A1, JP2004203170A, US5660656A, WO00/38906A1, WO03/035378A1, FR2771050A1.

L'invention a pour but de supprimer tout risque de fissuration à l'une et/ou l'autre des extrémités libre radialement intérieure et radialement extérieure de chaque élément de renforcement filaire continu.

A cet effet, l'invention a pour objet un pneumatique de forme sensiblement torique autour d'une axe de révolution, comprenant un sommet, deux flancs, deux bourrelets, chaque flanc reliant chaque bourrelet au sommet, le pneumatique comprenant au moins un élément de renforcement filaire continu comprenant N≥2 tours circonférentiels autour de l'axe de révolution radialement superposés les uns sur les autres, l'élément de renforcement filaire continu comprenant une extrémité libre radialement extérieure et une extrémité libre radialement intérieure, l'élément de renforcement filaire continu s'étendant radialement au moins en partie dans un des deux bourrelets, pneumatique dans lequel au moins une des conditions I et Il est satisfaite:
I - l'extrémité libre radialement extérieure est, à l'azimut de l'extrémité libre radialement extérieure, agencée radialement entre :
   - au moins une première portion de l'élément de renforcement filaire continu, cette première portion étant agencée radialement à l'extérieur de l'extrémité libre radialement extérieure, et
   - au moins une deuxième portion de l'élément de renforcement filaire continu, cette deuxième portion étant agencée radialement à l'intérieur de l'extrémité libre radialement extérieure,
Il - l'extrémité libre radialement intérieure est, à l'azimut de l'extrémité libre radialement intérieure agencée radialement, entre :
   - au moins une première portion de l'élément de renforcement filaire continu, cette première portion étant agencée radialement à l'extérieur de l'extrémité libre radialement intérieure, et
   - au moins une deuxième portion de l'élément de renforcement filaire continu, cette deuxième portion étant agencée radialement à l'intérieur de l'extrémité libre radialement intérieure.

Les inventeurs à l'origine de l'invention ont découvert que, dans le pneumatique de l'état de la technique décrit ci-dessus, les efforts se concentraient, en fonction de l'architecture du pneumatique, dans une zone comprenant les deux tours radialement les plus intérieurs et/ou dans une zone comprenant les deux tours radialement les plus extérieurs. Ainsi, les inventeurs à l'origine de l'invention ont trouvé qu'en déplaçant l'une et/ou l'autre des extrémités libres en dehors des zones dans lesquelles les concentrations de contraintes sont les plus élevées, on pouvait supprimer tout risque de fissuration. Une telle solution est très avantageuse, notamment par rapport aux solutions conventionnellement utilisées pour réduire les risques de fissuration, comme par exemple l'utilisation de matrices élastomériques présentant une résistance à la fissuration élevée. En effet, si de telles matrices élastomériques permettent éventuellement de résoudre le problème, elles dégradent le comportement routier du pneumatique, notamment la rigidité de dérive, à cause de leur faible module.

Ainsi, la condition I caractérise le fait que l'extrémité libre radialement extérieure est embarrée entre deux portions de l'élément de renforcement filaire continu. De façon analogue, la condition Il caractérise le fait que l'extrémité libre radialement intérieure est embarrée entre deux portions de l'élément de renforcement filaire continu. Une conséquence implicite de l'invention est qu'une portion de l'élément de renforcement filaire continu croise au moins une autre portion de l'élément de renforcement filaire continu, le nombre de croisements dépendant d'où se situent les première et deuxième portions.

Un autre avantage de l'invention est, compte tenu de la résistance améliorée à la fissuration, de permettre d'augmenter l'adhérence sur sol sec. Ainsi, on pourra recommander de rouler à une pression plus basse que la pression recommandée du pneumatique de l'état de la technique et, en conséquence, améliorer l'adhérence sur sol sec. On pourra également utiliser une bande de roulement du pneumatique dont la composition permet d'améliorer l'adhérence sur sol sec, ce gain en adhérence augmentant alors significativement le risque de fissuration pour un pneumatique de l'état de la technique alors qu'il est sans conséquence avec le pneumatique selon l'invention.

Le choix de mettre en oeuvre la condition I seule, la condition Il seule ou les conditions I et Il ensemble sera déterminée par l'homme du métier en fonction de la sensibilité du pneumatique à la fissuration. En effet, certains pneumatiques peuvent présenter une sensibilité à la fissuration supérieure dans la zone de l'extrémité libre radialement extérieure alors que d'autres peuvent présenter une sensibilité à la fissuration supérieure dans la zone de l'extrémité libre radialement intérieure. Enfin, encore d'autres pneumatiques peuvent présenter des sensibilités à la fissuration équivalentes dans les zones des deux extrémités libres radialement intérieure et extérieure.

Selon une caractéristique de l'invention, l'élément de renforcement filaire continu s'étend radialement au moins en partie dans le bourrelet. Ainsi, l'élément de renforcement filaire continu s'étend radialement entre deux extrémités radiales radialement intérieure et radialement extérieure, au moins l'extrémité radiale radialement intérieure de l'élément de renforcement filaire continu est comprise entre les cotes radiales radialement intérieure et extérieure délimitant radialement le bourrelet.

Par extrémités libres, on entend que les deux extrémités radialement intérieure et extérieure ne sont pas jointes l'une à l'autre par un moyen de jonction, par exemple par un manchon.

Par continu, on entend que chaque matériau constitutif de l'élément de renforcement filaire est monolithique le long de l'élément de renforcement filaire. Ainsi, par exemple, si l'élément de renforcement filaire comprend un assemblage de plusieurs monofilaments métalliques, chaque monofilament métallique est monolithique et donc ininterrompu entre les deux extrémités libre de l'élément de renforcement filaire.

Par filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire présente une section circulaire.

Par direction axiale, on entend la direction sensiblement parallèle à l'axe de révolution du pneumatique, c'est-à-dire l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque coupant l'axe de rotation du pneumatique et sensiblement perpendiculaire à cet axe.

Par plan médian du pneumatique (noté M), on entend le plan perpendiculaire à l'axe de rotation du pneumatique qui est situé à mi-distance axiale des deux bourrelets et passe par le milieu axial de l'armature de sommet.

Par plan circonférentiel équatorial du pneumatique (noté E), on entend la surface cylindrique théorique passant par l'équateur du pneumatique, perpendiculaire au plan médian et à la direction radiale. L'équateur du pneumatique est, dans un plan de coupe méridienne (plan perpendiculaire à la direction circonférentielle et parallèle aux directions radiale et axiales) l'axe parallèle à l'axe de rotation du pneumatique et située à équidistance entre le point radialement le plus extérieur de la bande de roulement destiné à être au contact avec le sol et le point radialement le plus intérieur du pneumatique destiné à être en contact avec un support, par exemple une jante, la distance entre ces deux points étant égale à H.

Par plan méridien, on entend un plan parallèle à et contenant l'axe de rotation du pneumatique et perpendiculaire à la direction circonférentielle.

Par bourrelet, on entend la portion du pneumatique destiné à permettre l'accrochage du pneumatique sur un support de montage, par exemple une roue comprenant une jante. Ainsi, chaque bourrelet est notamment destiné à être au contact d'un crochet de la jante permettant son accrochage.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Les pneumatiques de l'invention sont préférentiellement destinés à des véhicule de tourisme tels que définis au sens de la norme de la European Tyre and Rim Technical Organisation ou « ETRTO », 2019. Avantageusement, un tel pneumatique présente une section dans un plan de coupe méridien caractérisée par une hauteur de section H et une largeur de section nominale ou grosseur boudin S au sens de la norme de la European Tyre and Rim Technical Organisation ou « ETRTO », 2019 telles que le rapport nominal d'aspect H/S, exprimé en pourcentage, est au plus égal à 70 et est au moins égal à 25, et la largeur de section nominale ou grosseur boudin S est au moins égale à 205 mm et au plus égal à 385 mm. En outre, le diamètre au crochet D, définissant le diamètre nominal de la jante de montage du pneumatique, est au moins égal à 12 pouces, de préférence au moins égal à 16 pouces et au plus égal à 24 pouces.

Dans ce qui suit, lorsqu'on fait référence à la première portion et à la deuxième portion de la condition I, I', I" ou EI, on fait implicitement référence à la première portion et à la deuxième portion relativement à l'extrémité libre radialement extérieure. De façon analogue, lorsqu'on fait référence à la première portion et à la deuxième portion de la condition II, II', II" ou EII, on fait implicitement référence à la première portion et à la deuxième portion relativement à l'extrémité libre radialement intérieure.

Dans des modes de réalisation particulièrement avantageux, le ou chaque élément de renforcement filaire continu comprend un assemblage de plusieurs monofilaments élémentaires métalliques.

Par monofilament élémentaire métallique, on entend un filament monolithique constitué intégralement d'un ou de plusieurs métaux ou alliages de métaux. De tels monofilaments élémentaires métalliques sont issus, par exemple d'un procédé de coulée suivi d'un procédé de tréfilage, et éventuellement suivi par un procédé de revêtement métallique. De tels monofilaments élémentaires métalliques sont préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des monofilaments élémentaires métalliques. Le métal utilisé, qu'il s'agisse en particulier d'un acier au carbone ou d'un acier inoxydable, peut être lui-même revêtu d'une couche métallique améliorant par exemple les propriétés de mise en oeuvre des monofilaments élémentaires métalliques, ou les propriétés d'usage des monofilaments élémentaires métalliques, telles que les propriétés d'adhésion, de résistance à la corrosion ou encore de résistance au vieillissement. Selon un mode de réalisation préférentiel, chaque monofilament élémentaitre métallique est recouvert d'une couche de laiton (alliage Zn-Cu), de zinc ou de bronze. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle les monofilaments élémentaires métalliques sont destinés à être noyés et un allègement de la matrice ainsi renforcée. Le ou l'assemblage de plusieurs monofilaments élémentaires métalliques peut être revêtu d'une composition polymérique, par exemple comme cela est décrit dans US20160167438.

Dans d'autres modes de réalisation, on pourra néanmoins envisager que le ou chaque élément de renforcement filaire continu comprennent au moins un monofilament élémentaire textile, de préférence au moins un brin de plusieurs monofilaments élémentaires textiles et encore plus préférentiellement un assemblage de plusieurs brins de plusieurs monofilaments élémentaires textiles.

Dans un mode de réalisation avantageux, seule la condition I est satisfaite. Les inventeurs à l'origine de l'invention ont déterminé, que dans la plupart des architectures de pneumatiques, l'extrémité libre radialement extérieure était l'extrémité libre la plus susceptible de conduire à des risques de fissuration et qu'il était suffisant d'embarrer seulement cette extrémité libre radialement extérieure pour supprimer tout risque.

Dans un autre mode de réalisation utilisable notamment dans le cas de pneumatiques à usage ultra sportif dans lesquels les niveaux de sollicitations sont extrêmement élevés, les conditions I et Il sont satisfaites.

De façon à minimiser l'encombrement de l'élément de renforcement filaire continu, l'élément de renforcement filaire continu comprenant N≥1 tours circonférentiels complets et au plus un tour circonférentiel incomplet, N est inférieur ou égal à 10, de préférence inférieur ou égal à 8. Par tour circonférentiel complet, on entend une portion de l'élément de renforcement filaire continu décrivant, à partir d'un azimut de référence, un angle égal à 360° autour de l'axe de révolution du pneumatique ou du support de fabrication. A l'inverse, un tour circonférentiel incomplet ne décrit, à partir d'un azimut de référence, qu'un angle inférieur à 360° autour de l'axe de révolution du pneumatique ou du support. Le ou chaque élément de renforcement filaire continu peut être constitué de N tours circonférentiels complets Tk sans tour circonférentiel incomplet T'k+1 ou bien être constitué de N tours circonférentiels complets Tk et d'un tour circonférentiel incomplet T'k+1, k allant de 1 à N lorsqu'on se déplace de l'extrémité radialement extérieure vers l'extrémité radialement intérieure dans le cas de la condition I et k allant de 1 à N lorsqu'on se déplace de l'extrémité radialement intérieure vers l'extrémité radialement extérieure dans le cas de la condition II.

De préférence, afin d'éviter que l'extrémité libre radialement extérieure ou que l'extrémité libre radialement intérieure ne soit positionnée sur la trajectoire d'une autre portion de l'élément de renforcement filaire continu, ce qui pourrait engendrer une instabilité lors de la fabrication du pneumatique et donc une zone de l'élément de renforcement filaire continu susceptible d'être sensible à la fissuration:
- la première portion de l'élément de renforcement filaire continu agencée radialement à l'extérieur de l'extrémité libre radialement extérieure et la deuxième portion de l'élément de renforcement filaire continu agencée radialement à l'intérieur de l'extrémité libre radialement extérieure sont radialement consécutives,
- la première portion de l'élément de renforcement filaire continu agencée radialement à l'extérieure de l'extrémité libre radialement intérieure et la deuxième portion de l'élément de renforcement filaire continu agencée radialement à l'intérieur de l'extrémité libre radialement intérieure sont radialement consécutives.

Par radialement consécutives, on entend que les première et deuxième portions sont agencées de sorte que, à l'azimut de l'extrémité libre considérée, il n'existe pas, à l'exception de l'extrémité libre considérée, d'autres portions de l'élément de renforcement filaire continu radialement intercalée entre chaque portion radialement extérieure et intérieure à l'extrémité libre considérée.

Avantageusement:
- la première portion de l'élément de renforcement filaire continu agencée radialement à l'extérieur de l'extrémité libre radialement extérieure est, à l'azimut de l'extrémité libre radialement extérieure, la portion la plus radialement à l'extérieur de l'élément de renforcement filaire continu,
- la deuxième portion de l'élément de renforcement filaire continu agencée radialement à l'intérieur de l'extrémité libre radialement intérieure, est à l'azimut de l'extrémité libre radialement intérieure, la portion la plus radialement à l'intérieur de l'élément de renforcement filaire continu.

Ainsi, on minimise le nombre de croisements entre les portions de l'élément de renforcement filaire continu et, en conséquence, les surépaisseurs locales dans chaque bourrelet du pneumatique. Ainsi, ici, il n'existe qu'un unique croisement entre deux portions de l'élément de renforcement filaire continu.

De façon à limiter la hauteur radiale de l'élément de renforcement filaire continu et à ne pas exposer ce dernier à des contraintes de flexion susceptibles d'accroitre les risques de fissuration, notamment à l'extrémité libre radialement extérieure, l'élément de renforcement filaire continu s'étend radialement intégralement dans le bourrelet. En d'autres termes, le bourrelet comprend l'élément de renforcement filaire continu dans son intégralité. Ainsi, chaque extrémité radiale radialement intérieure et radialement extérieure de l'élément de renforcement filaire continu est comprise entre les cotes radiales radialement intérieure et extérieure délimitant radialement le bourrelet.

Avantageusement, le pneumatique comprend une armature de carcasse ancrée dans chaque bourrelet et s'étendant dans chaque flanc et radialement intérieurement au sommet.

L'élément de renforcement filaire continu permet un ancrage de l'armature de carcasse dans le bourrelet.

Dans un mode de réalisation particulièrement avantageux, l'élément de renforcement filaire continu est agencé axialement à l'extérieur de l'armature de carcasse. En effet, les inventeurs ont identifié que l'élément de renforcement filaire continu agencé axialement à l'extérieur de l'armature de carcasse étant celui le plus contraint et sollicité par la jante, il était avantageux d'embarrer prioritairement l'une et/ou l'autre des extrémités libres de cet élément de renforcement filaire continu axialement extérieur afin de supprimer efficacement les risques de fissuration.

Par agencé axialement à l'extérieur de l'armature de carcasse, on entend que, dans un plan de coupe méridien du pneumatique, l'élément de renforcement filaire continu s'étendant radialement entre deux extrémités radiales radialement intérieure et radialement extérieure, la portion de l'armature de carcasse s'étendant radialement entre deux droites axiales passant par les extrémités radialement intérieure et radialement extérieure est agencée axialement à l'intérieur de l'élément de renforcement filaire continu. De façon analogue, par agencé axialement à l'intérieur de l'armature de carcasse, on entend que, dans un plan de coupe méridien du pneumatique, la portion de l'armature de carcasse s'étendant radialement entre deux droites axiales passant par les deux extrémités axiales radialement intérieure et radialement extérieure est agencée axialement à l'extérieur de l'élément de renforcement filaire continu.

Dans des modes de réalisation permettant d'ancrer efficacement l'armature de carcasse, chaque bourrelet comprend:
- un élément de renforcement filaire continu axialement intérieur agencé axialement à l'intérieur de l'armature de carcasse,
- un élément de renforcement filaire continu axialement extérieur agencé axialement à l'extérieur de l'armature de carcasse.

Dans ces modes de réalisation permettant d'ancrer efficacement l'armature de carcasse et évitant toute fissuration à proximité des extrémité libres radialement extérieure et/ou radialement intérieure de l'élément de renforcement filaire continu axialement intérieur, l'élément de renforcement filaire continu axialement intérieur comprend Ni≥2 tours circonférentiels autour de l'axe de révolution radialement superposés les uns sur les autres, l'élément de renforcement filaire axialement intérieur comprenant une extrémité libre radialement extérieure et une extrémité libre radialement intérieure, au moins une des conditions I', II' suivantes est satisfaite:
I' - l'extrémité libre radialement extérieure de l'élément de renforcement filaire continu axialement intérieur est, à l'azimut de l'extrémité libre radialement extérieure, agencée radialement entre :
   - au moins une première portion de l'élément de renforcement filaire continu axialement intérieur, cette première portion étant agencée radialement à l'extérieur de l'extrémité libre radialement extérieure, et
   - au moins une deuxième portion de l'élément de renforcement filaire continu axialement intérieur, cette deuxième portion étant agencée radialement à l'intérieur de l'extrémité libre radialement extérieure,
II' - l'extrémité libre radialement intérieure de l'élément de renforcement filaire continu axialement intérieur est, à l'azimut de l'extrémité libre radialement intérieure agencée radialement, entre :
   - au moins une première portion de l'élément de renforcement filaire continu axialement intérieur, cette première portion étant agencée radialement à l'extérieur de l'extrémité libre radialement intérieure, et
   - au moins une deuxième portion de l'élément de renforcement filaire continu axialement intérieur, cette deuxième portion étant agencée radialement à l'intérieur de l'extrémité libre radialement intérieure.

Dans ces modes de réalisation permettant d'ancrer efficacement l'armature de carcasse et évitant toute fissuration à proximité des extrémité libres radialement extérieure et/ou radialement intérieure de l'élément de renforcement filaire continu axialement extérieur, l'élément de renforcement filaire continu axialement extérieur comprend Ne≥2 tours circonférentiels autour de l'axe de révolution radialement superposés les uns sur les autres, l'élément de renforcement filaire axialement extérieur comprenant une extrémité libre radialement extérieure et une extrémité libre radialement intérieure, au moins une des conditions I", II" suivantes est satisfaite:
I" - l'extrémité libre radialement extérieure de l'élément de renforcement filaire continu axialement extérieur est, à l'azimut de l'extrémité libre radialement extérieure, agencée radialement entre :
   - au moins une première portion de l'élément de renforcement filaire continu axialement extérieur, cette première portion étant agencée radialement à l'extérieur de l'extrémité libre radialement extérieure, et
   - au moins une deuxième portion de l'élément de renforcement filaire continu axialement extérieur, cette deuxième portion étant agencée radialement à l'intérieure de l'extrémité libre radialement extérieure,
II" - l'extrémité libre radialement intérieure de l'élément de renforcement filaire continu axialement extérieur est, à l'azimut de l'extrémité libre radialement intérieure agencée radialement, entre :
   - au moins une première portion de l'élément de renforcement filaire continu axialement extérieur, cette première portion étant agencée radialement à l'extérieur de l'extrémité libre radialement intérieure et
   - au moins une deuxième portion de l'élément de renforcement filaire continu axialement extérieur, cette deuxième portion étant agencée radialement à l'intérieur de l'extrémité libre radialement intérieure.

Dans des modes de réalisation permettant d'éviter un retournement d'au moins une couche de carcasse autour d'un élément de renforcement et donc de simplifier l'architecture du pneumatique, l'armature de carcasse comprenant au moins une couche de carcasse, la ou chaque couche de carcasse étant délimitée axialement par deux bords axiaux, chaque bord axial est agencé axialement entre l'extrémité radialement intérieure de l'élément de renforcement filaire continu axialement intérieure et l'extrémité radialement intérieure de l'élément de renforcement filaire continu axialement extérieur.

Par axialement entre, on entend que chaque bord axial de la ou chaque couche de carcasse est, dans un plan de coupe méridien du pneumatique, compris entre deux droites radiales passant par chaque extrémité radialement intérieure des éléments de renforcement filaires continus considérés.

Dans une première variante, l'armature de carcasse comprend une unique couche de carcasse. Dans cette première variante, l'armature de carcasse est, à l'exception de l'unique couche de carcasse, dépourvue de toute couche renforcée par des éléments de renfort filaires. Les éléments de renfort filaires de telles couches renforcées exclues de l'armature de carcasse du pneumatique comprennent les éléments de renfort filaires métalliques et les éléments de renfort filaires textiles. De façon très préférentielle, l'armature de carcasse est constituée par l'unique couche de carcasse.

Dans une deuxième variante, notamment utilisable pour des pneumatiques nécessitant un renforcement supplémentaire de l'armature de carcasse, par exemple pour permettre d'être conforme aux exigences permettant un marquage « Extra-Load » ou « Reinforced », l'armature de carcasse comprend une couche de carcasse radialement intérieure et une couche de carcasse radialement extérieure agencée à l'extérieure de la couche de carcasse radialement intérieure.

Dans la deuxième variante, afin d'améliore l'ancrage des deux couches de carcasse, chaque bourrelet comprenant un élément de renforcement filaire continu axialement intermédiaire agencé axialement entre l'élément de renforcement filaire continu axialement intérieur et l'élément de renforcement filaire continu axialement extérieur:
- la couche de carcasse radialement intérieure étant délimitée axialement par deux bords axiaux, un des bords axiaux de la couche de carcasse radialement intérieure est agencé axialement entre l'extrémité radialement intérieure de l'élément de renforcement filaire continu axialement intérieur et l'extrémité radialement intérieure de l'élément de renforcement filaire continu axialement intermédiaire, et
- la couche de carcasse radialement extérieure étant délimitée axialement par deux bords axiaux, un des bords axiaux de la couche de carcasse radialement extérieure est agencé axialement entre l'extrémité radialement intérieure de l'élément de renforcement filaire continu axialement intermédiaire et l'extrémité radialement intérieure de l'élément de renforcement filaire continu axialement extérieur.

Avantageusement, l'élément de renforcement filaire continu axialement intermédiaire pourra comprendre Nm≥2 tours circonférentiels autour de l'axe de révolution radialement superposés les uns sur les autres, l'élément de renforcement filaire continu axialement intermédiaire comprenant une extrémité libre radialement extérieure et une extrémité libre radialement intérieure et pouvant être conforme à l'invention, c'est-à-dire satisfaire au moins une des conditions I‴ et II‴ suivante :
I‴ - l'extrémité libre radialement extérieure est, à l'azimut de l'extrémité libre radialement extérieure, agencée radialement entre :
   - au moins une première portion de l'élément de renforcement filaire continu axialement intermédiaire, cette première portion étant agencée radialement à l'extérieur de l'extrémité libre radialement extérieure, et
   - au moins une deuxième portion de l'élément de renforcement filaire continu axialement intermédiaire, cette deuxième portion étant agencée radialement à l'intérieur de l'extrémité libre radialement extérieure,
II‴ - l'extrémité libre radialement intérieure est, à l'azimut de l'extrémité libre radialement intérieure agencée radialement, entre :
   - au moins une première portion de l'élément de renforcement filaire continu axialement intermédiaire, cette première portion étant agencée radialement à l'extérieur de l'extrémité libre radialement intérieure, et
   - au moins une deuxième portion de l'élément de renforcement filaire continu axialement intermédiaire, cette deuxième portion étant agencée radialement à l'intérieur de l'extrémité libre radialement intérieure.

Afin de s'assurer que le pneumatique comprenne le nombre attendu de tours circonférentiels sur l'ensemble de la circonférence du pneumatique, l'azimut de l'extrémité libre radialement extérieure et l'azimut de l'extrémité libre radialement intérieure sont séparées l'une de l'autre d'un écart angulaire compris entre 90° et 180°. En outre, en décalant angulairement l'azimut de l'extrémité libre radialement extérieure et l'azimut de l'extrémité libre radialement intérieure, on améliore l'uniformité du pneumatique en répartissant la masse de l'élément de renforcement filaire continu.

Dans des modes de réalisation permettant l'obtention des performances de pneumatiques dits radiaux comme défini par l'ETRTO, l'armature de carcasse comprend au moins une couche de carcasse, la ou chaque couche de carcasse comprenant des éléments de renfort filaires de carcasse, chaque élément de renfort filaire de carcasse s'étendant sensiblement selon une direction principale formant avec la direction circonférentielle du pneumatique, un angle, en valeur absolue, supérieur ou égal à 60°, de préférence allant de 80° à 90°.

Par direction principale selon laquelle un élément de renfort filaire s'étend, on comprend la direction selon laquelle l'élément de renfort filaire s'étend selon sa plus grande longueur. La direction principale selon laquelle un élément de renfort filaire s'étend peut être rectiligne ou courbe, l'élément de renfort pouvant décrire le long de sa direction principale une trajectoire rectiligne ou bien ondulée.

Dans le pneumatique, l'angle considéré est l'angle, en valeur absolue, le plus petit des deux angles définis entre la droite de référence, ici la direction circonférentielle du pneumatique, et la direction principale selon laquelle l'élément de renfort filaire considéré s'étend.

Dans le pneumatique, par orientation d'un angle, on entend le sens, horaire ou anti-horaire, dans lequel il faut tourner depuis la droite de référence, ici la direction circonférentielle du support ou du pneumatique, définissant l'angle pour atteindre la direction principale selon laquelle l'élément de renfort filaire considéré s'étend.

Avantageusement, le sommet comprend :
- une bande de roulement destinée à venir en contact avec un sol lors du roulage du pneumatique,
- une armature de sommet agencée radialement entre la bande de roulement et l'armature de carcasse.

Ainsi, le sommet comprend la bande de roulement et l'armature de sommet. On entend par bande de roulement une bande de matériau polymérique, de préférence élastomérique, délimitée radialement vers l'extérieur, par une surface destinée à être au contact d'un sol et radialement vers l'intérieur, par l'armature de sommet.

La bande de matériau polymérique est constituée d'une couche d'un matériau polymérique, de préférence élastomérique ou bien constituée d'un empilement de plusieurs couches, chaque couche étant constituée d'un matériau polymérique, de préférence élastomérique.

De façon avantageuse, l'armature de sommet comprenant une armature de travail comprenant au moins une couche de travail, la ou chaque couche de travail comprenant des éléments de renfort filaires de travail, chaque élément de renfort filaire de travail s'étendant selon une direction principale formant avec la direction circonférentielle du pneumatique, un angle, en valeur absolue, strictement supérieur à 10°, de préférence allant, de 15° à 50° et plus préférentiellement de 25° à 45°.

Afin d'obtenir une triangulation efficace du sommet du pneumatique, l'armature de travail comprenant deux couches de travail, la direction principale selon laquelle s'étend chaque élément de renfort filaire de travail d'une des couches de travail et la direction principale selon laquelle s'étend chaque élément de renfort filaire de travail de l'autre des couches de travail forment, avec la direction circonférentielle du pneumatique, des angles d'orientations opposées.

De façon à améliorer la tenue géométrique et les performances du pneumatique à haute vitesse ou sous fortes sollicitations, l'armature de sommet comprend une armature de frettage comprenant au moins une couche de frettage, la ou chaque couche de frettage comprenant au moins un élément de renfort filaire de frettage enroulé circonférentiellement hélicoïdalement selon une direction principale du ou de chaque élément de renfort filaire de frettage formant avec la direction circonférentielle du pneumatique, un angle, en valeur absolue, inférieur ou égal à 10°, de préférence inférieur ou égal à 7° et plus préférentiellement inférieur ou égal à 5°.

L'armature de frettage est ainsi radialement intercalée entre l'armature de travail et la bande de roulement.

Dans un mode de réalisation avantageux, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort filaires. Les éléments de renfort filaires de telles armatures exclues de l'armature de sommet du pneumatique comprennent les éléments de renfort filaires métalliques et les éléments de renfort filaires textiles. De façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort filaires. Les éléments de renfort filaires de telles armatures exclues du sommet du pneumatique comprennent les éléments de renfort filaires métalliques et les éléments de renfort filaires textiles. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement.

Par directement radialement au contact, on comprend que les objets considérés directement radialement au contact l'un de l'autre, ici les couches, armatures ou la bande de roulement, ne sont séparés radialement par aucun objet, par exemple par aucune couche, armature ni bande qui serait interposé radialement entre les objets considérés directement radialement au contact l'un de l'autre.

Avantageusement, les éléments de renfort filaires de chaque couche sont noyés dans une matrice élastomérique. Les différentes couches peuvent comprendre la même matrice élastomérique ou bien des matrices élastomériques distinctes.

Par matrice élastomérique, on entend une matrice présentant, à l'état réticulé, un comportement élastomérique. Une telle matrice est avantageusement obtenue par réticulation d'une composition comprenant au moins un élastomère et au moins un autre composant. De préférence, la composition comprenant au moins un élastomère et au moins un autre composant comprend un élastomère, un système de réticulation et une charge. Les compositions utilisées pour ces couches sont des compositions conventionnelles pour calandrage de renforts, typiquement à base de caoutchouc naturel ou autre élastomère diénique, d'une charge renforçante telle que du noir de carbone, d'un système de vulcanisation et des additifs usuels. L'adhésion entre les éléments de renfort filaires et la matrice dans laquelle ils sont noyés est assurée par exemple par une composition adhésive usuelle, par exemple une colle du type RFL ou colle équivalente.

Avantageusement, chaque élément de renfort filaire de travail est métallique. Par élément filaire métallique, on entend par définition un élément filaire formé d'un ou d'un assemblage de plusieurs monofilaments élémentaires constitués intégralement (pour 100% des fils) d'un matériau métallique. Un tel élément filaire métallique est préférentiellement mis en oeuvre avec un ou des fils en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer). Mais il est bien entendu possible d'utiliser d'autres aciers ou d'autres alliages. Lorsqu'un acier au carbone est avantageusement utilisé, sa teneur en carbone (% en poids d'acier) va de préférence de 0,05% à 1,2%, notamment de 0,5% à 1,1% ; ces teneurs représentent un bon compromis entre les propriétés mécaniques requises pour le pneumatique et la faisabilité des fils. Le métal ou l'acier utilisé, qu'il s'agisse en particulier d'un acier au carbone ou d'un acier inoxydable, peut être lui-même revêtu d'une couche métallique améliorant par exemple les propriétés de mise en oeuvre du câble métallique et/ou de ses éléments constitutifs, ou les propriétés d'usage du câble et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc. Chaque monofilament élémentaire métallique est, comme décrit ci-dessus, de préférence en acier au carbone, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée. Le ou l'assemblage de plusieurs monofilaments élémentaires métalliques peut être revêtu d'une composition polymérique, par exemple comme cela est décrit dans US20160167438.

Un autre objet de l'invention est un procédé de fabrication d'un pneumatique tel que défini ci-dessus, dans lequel,
- on pose une masse de composition polymérique sur un support sensiblement de révolution autour d'un axe de révolution du support, la masse de composition polymérique étant destinée à former au moins une partie d'au moins un des bourrelets, puis,
- on réalise l'une ou l'autre des étapes EI et EII suivantes :
   EI - on pose l'extrémité libre radialement extérieure directement au contact de la masse de la composition polymérique puis on enroule l'élément de renforcement filaire continu sur N≥2 tours circonférentiels autour de l'axe de révolution du support, superposés les uns sur les autres, de sorte que l'extrémité libre radialement extérieure soit, à l'azimut de l'extrémité libre radialement extérieure, agencée radialement entre :
      - au moins la première portion de l'élément de renforcement filaire continu agencée radialement à l'extérieur de l'extrémité libre radialement extérieure, et
      - au moins la deuxième portion de l'élément de renforcement filaire continu agencée radialement à l'intérieure de l'extrémité libre radialement extérieure),
   EII - on pose l'extrémité libre radialement intérieure directement au contact de la masse de la composition polymérique puis on enroule l'élément de renforcement filaire continu sur N≥2 tours circonférentiels autour de l'axe de révolution du support superposés les uns sur les autres, de sorte que l'extrémité libre radialement intérieure soit, à l'azimut de l'extrémité libre radialement intérieure, agencée radialement entre :
      - au moins la première portion de l'élément de renforcement filaire continu agencée radialement à l'extérieur de l'extrémité libre radialement intérieure, et
      - au moins la deuxième portion de l'élément de renforcement filaire continu agencée radialement à l'intérieur de l'extrémité libre radialement intérieure.

Un tel procédé peut notamment être mis en oeuvre avec un support rigide non déformable de forme sensiblement toroïdale autour de l'axe de révolution du support, par exemple comme décrit dans WO03/101713, EP1094930, EP1463627 ou encore EP0976535.

Le procédé permet avantageusement de coincer l'extrémité libre destinée à être embarrée en la posant en premier sur la masse de composition polymérique et en la recouvrant par les tours formés postérieurement. Ainsi, une fois l'extrémité libre destinée à être embarrée recouverte par un ou plusieurs tours formés postérieurement, l'extrémité libre destinée à être embarrée est coincée et ne peut plus glisser, permettant ainsi une manutention ultérieure aisée de l'ébauche de pneumatique ainsi formée.

Ce procédé est notamment bien plus avantageux qu'un procédé dans lequel on commencerait l'enroulage par l'extrémité libre destinée à ne pas être embarrée et qui, bien que permettant de fabriquer un pneumatique conforme à l'invention, verrait l'extrémité libre destinée à être embarrée posée en dernier et donc non coincée. L'extrémité libre destinée à être embarrée devrait donc venir croiser, axialement à l'extérieur, un ou plusieurs tours formés antérieurement et risquerait de se décoller de la masse de composition polymérique, sauf à prévoir un moyen supplémentaire de fixation de cette extrémité libre sur l'ébauche ainsi formée.

Une composition polymérique conforme à l'invention est une composition comprenant au moins un polymère. Un polymère est une macromolécule issu de la polymérisation d'un ou de plusieurs monomères. Parmi les polymères préférés, on citera les polymères thermoplastiques, les polymères thermodurcissables et les polymères co-réticulables. Parmi les polymères thermoplastiques, on citera par exemple les polyesters, les polyamides aromatiques, les polyamides aliphatiques, les polyuréthanes, les élastomères thermoplastiques, de préférence les élastomères dièniques thermoplastiques, les copolymères de ces polymères et les mélanges de ces polymères. Parmi les polymères thermodurcissables, on citera les résines aminoplastes, phénoplastes, les polyuréthanes, les résines vinylesters et les mélanges de ces polymères. Parmi les polymères co-réticulables, on citera les polymères comprenant au moins une insaturation ou double liaison, par exemple et de manière très préférée les élastomères diéniques. La composition polymérique peut évidemment comprendre d'autres constituants, par exemple un système de réticulation, des charges, des résines ou bien encore d'autres additifs couramment utilisés dans le domaine du pneumatique.

L'invention ainsi que ses avantages seront aisément compris à la lumière de la description détaillée et des exemples de réalisation non limitatifs qui suivent, ainsi que des figures 1 à 27 relatives à ces exemples dans lesquels :
- la figure 1 est une vue dans le plan de coupe méridien 1-1' de la figure 2 d'un pneumatique selon l'état de la technique;
- la figure 2 est une vue schématique d'un élément de renforcement filaire continu isolé du pneumatique de la figure 1 ;
- la figure 3 est une vue analogue à celle de la figure 1 d'un pneumatique selon un premier mode de réalisation de l'invention ;
- la figure 4 est une vue en arraché du pneumatique de la figure 3 illustrant l'agencement des éléments de renfort filaires dans et sous le sommet;
- la figure 5 est une vue analogue à celle de la figure 2 d'un élément de renforcement filaire continu isolé du pneumatique de la figure 3 ;
- la figure 6 est une vue de détails de la partie VI de la figure 5 ;
- les figures 7 et 8 sont des vues du bourrelet du pneumatique de la figure 3 dans les plans de coupe méridien respectivement 7-7' et 8-8' de la figure 5 ;
- les figures 9 à 14 illustrent différentes étapes du procédé permettant de fabriquer le pneumatique de la figure 3 ;
- la figure 15 est une vue d'un bourrelet d'un pneumatique selon un deuxième mode de réalisation,
- les figures 16 et 17 sont des vues analogues à celles des figures 5 et 6 du pneumatique de la figure 15 ;
- les figures 18 et 19 sont des vues d'un bourrelet d'un pneumatique selon un troisième mode de réalisation,
- la figure 20 est une vue analogue à celles des figures 5 et 16 du pneumatique des figures 18 et 19;
- les figures 21 à 25 sont des vues analogues à celles des figures 15 et 19 de pneumatiques selon d'autres modes de réalisation de l'invention ;
- la figure 26 est une vue analogue à celle de la figure 3 d'un pneumatique selon un quatrième mode de réalisation, et
- la figure 27 est une vue analogue à celle des figures 15 et 19 d'un pneumatique selon un cinquième mode de réalisation.

Dans les figures relatives au pneumatique, on a représenté un repère X, Y, Z correspondant aux directions habituelles respectivement axiale (Y), radiale (Z) et circonférentielle (X) d'un pneumatique. Dans les figures relatives au procédé, on a représenté un repère x, y, z correspondant aux directions habituelles respectivement axiale (y), radiale (z) et circonférentielle (x) d'un support de fabrication de forme sensiblement torique autour de l'axe y.

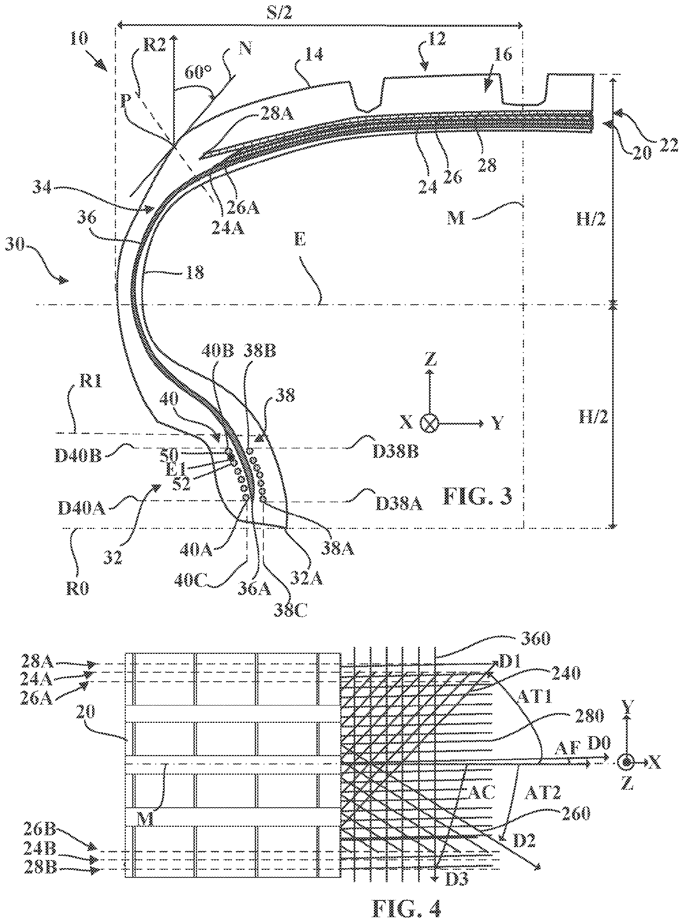

On a représenté sur la figure 3 un pneumatique, conforme à l'invention et désigné par la référence générale 10. Le pneumatique 10 présente une forme sensiblement torique autour d'un axe de révolution sensiblement parallèle à la direction axiale Y. Le pneumatique 10 est ici destiné à un véhicule de tourisme et présente des dimensions 275/35R20.

Le pneumatique 10 comprend un sommet 12 comprenant une bande de roulement 14 destinée à venir en contact avec un sol lors du roulage et une armature de sommet 16 s'étendant dans le sommet 12 selon la direction circonférentielle X. Le pneumatique 10 comprend également une couche d'étanchéité 18 à un gaz de gonflage étant destiné à délimiter une cavité interne fermée avec un support de montage du pneumatique 10 une fois le pneumatique 10 monté sur le support de montage, par exemple une jante. La couche d'étanchéité 18 est à base de butyl.

L'armature de sommet 16 comprend une armature de travail 20 et une armature de frettage 22.

L'armature de travail 16 comprend au moins une couche de travail et ici comprend deux couches de travail 24, 26. En l'espèce l'armature de travail 16 est constituée des deux couches de travail 24, 26. La couche de travail 24 radialement intérieure est agencée radialement à l'intérieur de la couche de travail 26 radialement extérieure.

L'armature de frettage 22 comprend au moins une couche de frettage et comprend ici une couche de frettage 28. L'armature de frettage 22 est ici constituée de la couche de frettage 28.

L'armature de sommet 16 est surmontée radialement de la bande de roulement 14. Ici, l'armature de frettage 22, ici la couche de frettage 28, est agencée radialement à l'extérieur de l'armature de travail 20 et est donc radialement intercalée entre l'armature de travail 20 et la bande de roulement 14. De façon préférentielle, on pourra envisager que l'armature de frettage 22 présente une largeur axiale au moins aussi grande que la largeur axiale de l'armature de travail 20 et, en l'espèce, dans le mode de réalisation illustré à la figure 3, l'armature de frettage 22 présente une largeur axiale plus grande que la largeur axiale de l'armature de travail 20.

Le pneumatique 10 comprend deux flancs 30 prolongeant le sommet 12 radialement vers l'intérieur. Le pneumatique 10 comporte en outre deux bourrelets 32 radialement intérieurs aux flancs 30. Chaque flanc 30 relie chaque bourrelet 32 au sommet 12.

Chaque flanc 30 s'étend radialement entre une cote radiale inférieure R1 et une cote radiale supérieure R2. La cote radiale inférieure R1 est, sur un plan de coupe méridien, une droite axiale correspondant à la frontière radiale avec chaque bourrelet 32 dont on rappelle ici qu'il est défini comme la portion du pneumatique destiné à être au contact d'un crochet de la jante permettant son accrochage, tel que cela est notamment défini par l'ETRTO - Standards Manual 2019. La cote radiale supérieure R2 est, sur un plan de coupe méridien, une droite perpendiculaire à la couche de carcasse ou, si le pneumatique comprend plusieurs couches de carcasse, perpendiculaire à la couche de carcasse radialement la plus intérieure, et passant par un point P de la surface extérieure du pneumatique 10 correspondant à la frontière entre le flanc 30 et la bande de roulement 14. Pour déterminer le point P, on trace, sur un plan de coupe méridien du pneumatique, en position montée gonflée à la pression nominale, la tangente N à la surface extérieure du pneumatique en tout point de ladite surface extérieure dans la zone de transition entre le flanc 30 et la bande de roulement 14. Le point P est le point le plus radialement extérieur pour lequel l'angle entre ladite tangente N et une direction sensiblement parallèle à la direction radiale Z est égal, en valeur absolue, à 60°.

Chaque bourrelet 32 est délimité radialement par la cote radiale supérieure R1 décrite ci-dessus et une cote radiale inférieure R0. Chaque bourrelet 32 présente une extrémité radialement intérieure 32A définissant la cote radiale intérieure R0.

Le pneumatique 10 comprend une armature de carcasse 34 ancrée dans chaque bourrelet 32. L'armature de carcasse 34 s'étend dans chaque flanc 30 et radialement intérieurement au sommet 12. L'armature de sommet 16 est agencée radialement entre la bande de roulement 20 et l'armature de carcasse 34. L'armature de carcasse 34 comprend au moins une couche de carcasse et ici comprend une unique couche de carcasse 36. En l'espèce, l'armature de carcasse 34 est constituée de l'unique couche de carcasse 36.

Chaque couche de travail 24, 26 de frettage 28 et de carcasse 36 comprend une matrice élastomérique dans laquelle sont noyés un ou des éléments de renfort filaires de la couche correspondante. On va maintenant décrire ces couches en référence à la figure 4.

L'armature de frettage 22, ici la couche de frettage 28, est délimitée axialement par deux bords axiaux 28A, 28B de l'armature de frettage 22. L'armature de frettage 22 comprend un ou plusieurs éléments de renfort filaires de frettage 280 enroulés circonférentiellement hélicoïdalement de façon à s'étendre axialement du bord axial 28A à l'autre bord axial 28B de la couche de frettage 28 selon une direction principale D0 de chaque élément de renfort filaire de frettage 280. La direction principale D0 forme, avec la direction circonférentielle X du pneumatique 10, un angle AF, en valeur absolue, inférieur ou égal à 10°, de préférence inférieur ou égal à 7° et plus préférentiellement inférieur ou égal à 5°. Ici, AF=-5°. Dans la présente description, on prendra comme convention que le sens horaire défini un angle orienté positif.

La couche de travail radialement intérieure 24 est délimitée axialement par deux bords axiaux 24A, 24B. La couche de travail radialement intérieure 24 comprend des éléments de renfort filaires de travail 240 s'étendant axialement du bord axial 24A à l'autre bord axial 24B les uns sensiblement parallèlement aux autres selon une direction principale D1. De façon analogue, la couche de travail radialement extérieure 26 est délimitée axialement par deux bords axiaux 26A, 26B. La couche de travail radialement extérieure 26 comprend des éléments de renfort filaires de travail 260 s'étendant axialement du bord axial 26A à l'autre bord axial 26B les uns sensiblement parallèlement aux autres selon une direction principale D2. La direction principale D1 selon laquelle s'étend chaque élément de renfort filaire de travail 240 de la couche de travail radialement intérieure 24 et la direction principale D2 selon laquelle s'étend chaque élément de renfort filaire de travail 260 de la couche de travail radialement extérieure 26 forment, avec la direction circonférentielle X du pneumatique 10, des angles respectivement AT1 et AT2 d'orientations opposées. Chaque direction principale D1, D2 forme, avec la direction circonférentielle X du pneumatique 10, un angle respectivement AT1, AT2, en valeur absolue, strictement supérieur à 10°, de préférence allant de 15° à 50° et plus préférentiellement allant de 25° à 45°. Ici, AT1=-33° et AT2=+33°.

La couche de carcasse 36 est délimitée axialement par deux bords axiaux 36A, 36B. La couche de carcasse 36 comprend des éléments de renfort filaires de carcasse 360 s'étendant axialement du bord axial 36A à l'autre bord axial 36B de la couche de carcasse 36 selon une direction principale D3 formant avec la direction circonférentielle X du pneumatique 10, un angle AC, en valeur absolue, supérieur ou égal à 60°, de préférence allant de 80° à 90° et ici AC=+90°.

Chaque élément de renfort filaire de frettage 280 comprend classiquement deux brins multifilamentaires, un des brins multifilamentaires étant constitué d'un filé de monofilaments de polyamide aliphatique, ici de nylon d'un titre égal à 140 tex, et l'autre de ces brins étant constitué d'un filé de monofilaments de polyamide aromatique, ici de l'aramide d'un tire égal à 167 tex, ces deux brins multifilamentaires étant mis en hélice individuellement à 290 tours par mètre dans un sens puis mis en hélice ensemble à 290 tours par mètre dans le sens opposé. Ces deux brins multifilamentaires sont enroulés en hélice l'un autour de l'autre.

Chaque élément de renfort filaire de travail 180 est un assemblage d'une couche interne de deux monofilaments en acier enroulés en hélice au pas de 12,5 mm dans un premier sens, par exemple le sens Z, et d'une couche externe de quatre monofilaments en acier enroulés en hélice autour de la couche interne au pas de 12,5 mm dans un deuxième sens opposé au premier sens, par exemple le sens S, chaque monofilament en acier présentant un diamètre égal à 0,23 mm.

Chaque élément de renfort filaire de carcasse 340 comprend classiquement trois brins multifilamentaires, chaque brin multifilamentaire étant constitué d'un filé de monofilaments de polyesters, ici de PET, ces trois brins multifilamentaires étant mis en hélice individuellement à 220 tours par mètre dans un sens puis mis en hélice ensemble à 220 tours par mètre dans le sens opposé. Chacun de ces brins multifilamentaires présente un titre égal à 220 tex.

Le pneumatique 10 comprend au moins un élément de renfort circonférentiel. En l'espèce, le pneumatique 10 comprend un élément de renforcement filaire continu axialement intérieur 38 agencé axialement à l'intérieur de l'armature de carcasse 34 et un élément de renforcement filaire continu axialement extérieur 40 agencé axialement à l'extérieur de l'armature de carcasse 34. Sur la figure 3, on a représenté les droites axiales D40A et D40B passant respectivement par les extrémités radialement intérieure 40A et radialement extérieure 40B et montrant que la portion radiale de l'armature de carcasse 34 s'étendant entre ces deux droites D40A et D40B est agencée axialement à l'intérieur de l'élément de renforcement filaire continu axialement extérieur 40. De façon analogue, on a représenté les droites axiales D38A et D38B passant respectivement par les extrémités radialement intérieure 38A et radialement extérieure 38B et montrant que la portion radiale de l'armature de carcasse 34 s'étendant entre ces deux droites D38A et D38B est agencée axialement à l'extérieur de l'élément de renforcement filaire continu axialement intérieur 38. Chaque élément de renforcement filaire continu axialement intérieur 38 et axialement extérieur 40 comprend respectivement des extrémités radialement intérieures 38A, 40A et radialement extérieures 38B, 40B. Ainsi, chaque élément de renforcement filaire continu 38, 40 s'étendant radialement entre les deux extrémités radiales radialement intérieure 38A, 40A et radialement extérieure 38B, 40B.

Chaque élément de renforcement filaire continu 38, 40, et en particulier, l'élément de renforcement filaire continu axialement extérieur 40, s'étend radialement au moins en partie dans chaque bourrelet 32 et ici radialement intégralement dans chaque bourrelet 32. Ainsi, chaque extrémité radiale 38A, 38B, 40A, 40B est comprise entre les cotes radiales radialement extérieure R1 et intérieure R0 délimitant radialement le bourrelet 32.

Chaque bord axial 36A, 36B de la couche de carcasse 36 est agencé axialement entre l'extrémité radialement intérieure 38A de élément de renforcement filaire continu axialement intérieur 38 et l'extrémité radialement intérieure 40A de élément de renforcement filaire continu axialement extérieur 40. Sur la figure 3, la cote axiale de chaque extrémité radialement intérieure 38A, 40A est matérialisée par deux droites en traits pointillés 38C et 40C.

Chaque élément de renforcement filaire continu axialement intérieur 38 et axialement extérieur 40 comprend un assemblage de plusieurs monofilaments élémentaires métalliques, et en l'espèce, est constitué d'un assemblage d'une couche interne de quatre monofilaments élémentaires d'acier au carbone de 0,35 mm enroulés en hélice au pas de 5 mm et d'une couche externe de neuf monofilaments élémentaires d'acier au carbone de 0,35 mm enroulés en hélice autour de la couche interne au pas de 10 mm.

L'élément de renforcement filaire continu axialement intérieur 38 comprend Ni tours circonférentiels complets, Ni étant inférieur ou égal à 10, de préférence inférieur ou égal à 8. Ici, l'élément de renforcement filaire continu axialement intérieur 38 comprend Ni=6 tours circonférentiels complets Ti1, Ti2, Ti3, Ti4, Ti5 et Ti6 et un tour circonférentiel incomplet Ti'7 autour de l'axe de révolution A radialement superposés les uns sur les autres. L'élément de renforcement filaire continu axialement intérieur comprend également une extrémité libre radialement extérieure E3 et une extrémité libre radialement intérieure E4 (non visibles sur les figures 3 à 14).

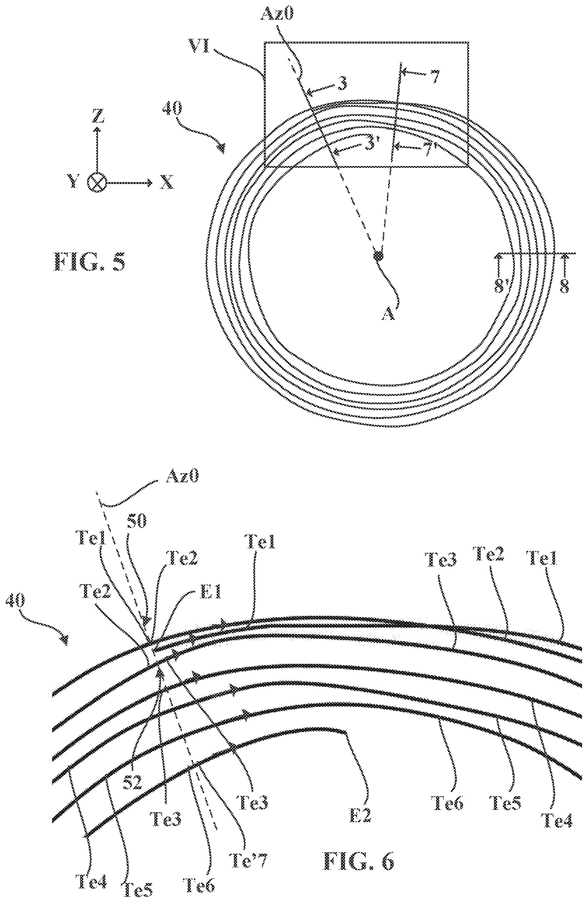

De façon analogue et comme cela est visible sur les figures 5 à 14, l'élément de renforcement filaire continu axialement extérieur 40 comprend Ne tours circonférentiels complets, Ne étant inférieur ou égal à 10, de préférence inférieur ou égal à 8. Ici, l'élément de renforcement filaire continu axialement extérieur 40 comprend Ne=6 tours circonférentiels complets Te1, Te2, Te3, Te4, Te5 et Te6 et un tour circonférentiel incomplet Te'7 autour de l'axe de révolution A, radialement superposés les uns sur les autres. L'élément de renforcement filaire continu axialement extérieur 40 comprend une extrémité libre radialement extérieure E1 et une extrémité libre radialement intérieure E2, l'extrémité libre radialement extérieure E1 étant agencée radialement à l'extérieure de l'extrémité libre radialement intérieure E2.

En référence à la figure 6, k étant croissant en se déplaçant le long de l'élément de renforcement filaire continu axialement extérieur 40 de l'extrémité libre radialement extérieure E1 vers l'extrémité libre radialement intérieure E2, le tour circonférentiel complet Te1 débute à l'extrémité radialement extérieure E1 définit un azimut de référence Az0. Le tour circonférentiel complet Te1 finit, après un tour circonférentiel complet autour de l'axe de révolution A, avant l'azimut Az0, à partir duquel débute alors le tour circonférentiel complet Te2. Le tour circonférentiel complet Te2 finit, après un tour complet autour de l'axe de révolution A, avant l'azimut Az0, à partir duquel débute alors le tour circonférentiel complet Te3, et ainsi de suite jusqu'au tour circonférentiel complet Te6 qui finit, après un tour complet autour de l'axe de révolution A, avant l'azimut Az0, et à partir duquel débute alors le tour circonférentiel incomplet Te'7.

L'extrémité libre radialement extérieure E1 de l'élément de renforcement filaire continu axialement extérieur 40 est, à l'azimut de l'extrémité libre radialement extérieure E1, ici l'azimut de référence Az0, agencée radialement entre :
- une première portion 50 de l'élément de renforcement filaire continu axialement extérieur 40, cette première portion 50 étant agencée radialement à l'extérieur de l'extrémité libre radialement extérieure E1, et
- une deuxième portion 52 de l'élément de renforcement filaire continu axialement extérieur 40, cette deuxième portion 52 étant agencée radialement à l'intérieure de l'extrémité libre radialement extérieure E1.

En l'espèce, l'extrémité libre radialement extérieure E1 est agencée radialement entre la première portion 50 répartie sur les tours circonférentiels complets Te1 et Te2 et la deuxième portion 52 répartie sur les tours circonférentiels complets Te2 et Te3.

La première portion 50 et la deuxième portion 52 sont radialement consécutives. La première portion 50 est, à l'azimut Az0 de l'extrémité libre radialement extérieure E1, la portion la plus radialement à l'extérieur de l'élément de renforcement filaire continu axialement extérieur 40.

Le pneumatique 10 selon le premier mode de réalisation satisfait donc les seules conditions I et I" décrites précédemment.

Sur la figure 3 correspondant à la vue en coupe selon le plan de coupe 3-3' de la figure 5, l'extrémité E1 est matérialisée sous la forme d'un cercle rempli de noir. Sur cette figure 3, l'extrémité E1 dans le plan 3-3' est agencée radialement entre la première portion 50 répartie sur les tours circonférentiels complets Te1 et Te2 et la deuxième portion 52 répartie sur les tours circonférentiels complets Te2 et Te3.

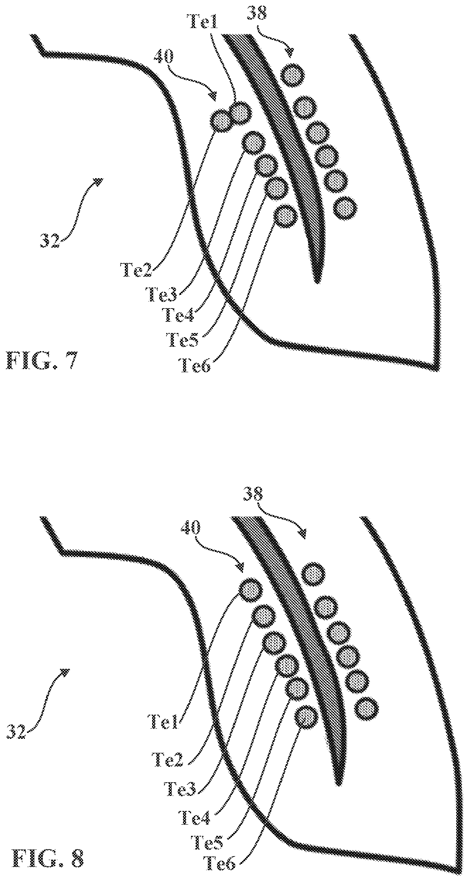

Sur la figure 7 correspondant à la vue en coupe selon le plan de coupe 7-7' de la figure 5, c'est-à-dire dans le plan de coupe méridien dans lequel il existe un croisement axial entre deux portions de l'élément de renforcement filaire continu axialement extérieur 40, la portion du tour Te1 dans ce plan 7-7' est axialement sensiblement aligné avec la portion du tour circonférentiel complet Te2 dans ce même plan 7-7'.

Sur la figure 8 correspondant à la vue en coupe selon le plan de coupe 8-8' de la figure 5, la portion du tour Te1 dans ce plan 8-8' est agencée radialement à l'extérieur de la portion du tour circonférentiel complet Te2.

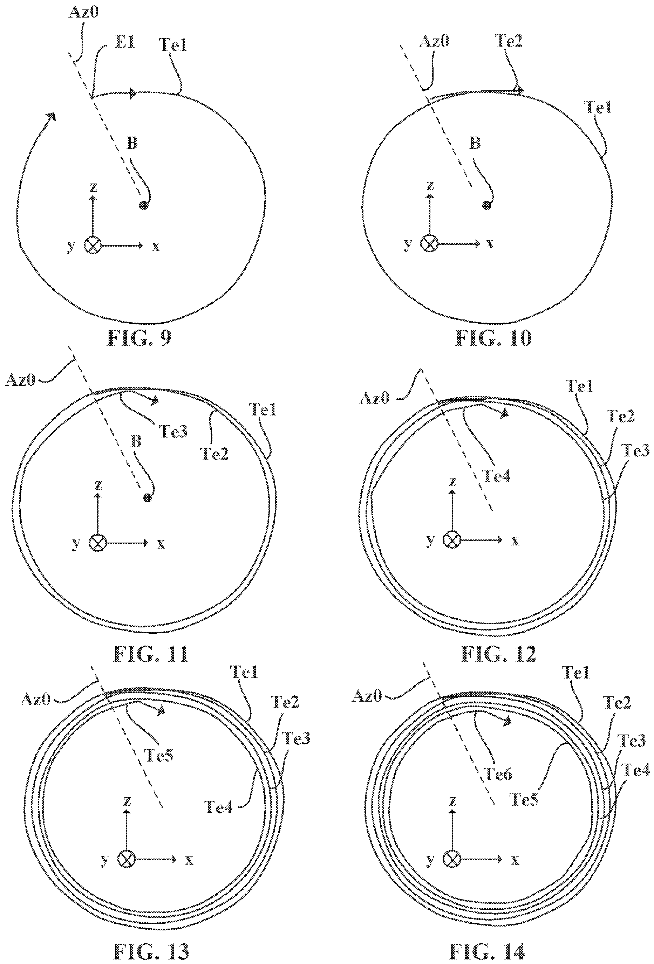

On va maintenant décrire un procédé de fabrication du pneumatique de la figure 3 en référence aux figures 9 à 14. Le procédé illustré est du type non-conformant, c'est-à-dire que l'on utilise un support de fabrication rigide non déformable. Ce type de procédé est notamment décrit dans WO03/101713, EP1094930, EP1463627 ou encore EP0976535.

Lors d'une première étape, on forme, sur un support de fabrication sensiblement de révolution autour d'un axe de révolution B du support la couche d'étanchéité 18. Puis, on pose une première masse de composition polymérique sur la couche d'étanchéité 18, cette première masse étant destinée à former au moins une partie du bourrelet 32. Puis, sur cette première masse de composition polymérique, on pose l'élément de renforcement filaire continu axialement intérieur 38. Puis, sur l'élément de renforcement filaire continu axialement intérieur 38, on forme la couche de carcasse 36, cette couche de carcasse comprenant axialement à l'extérieur des éléments de renfort filaires de carcasse 360, une deuxième masse de composition polymérique destinée à former au moins une partie du bourrelet 32.

Ensuite, on pose, sur la deuxième masse de composition polymérique, l'élément de renforcement filaire continu axialement extérieur 40. Pour ce faire, comme cela est représenté sur la figure 9, on pose l'extrémité libre radialement extérieure E1 directement au contact de la troisième masse de la composition polymérique. Puis, comme cela est illustré sur les figures 10 à 14, on enroule l'élément de renforcement filaire continu 40 sur les 6 tours circonférentiels complets Te1, Te2, Te3, Te4, Te5, Te6 et sur le tour circonférentiel incomplet T'e7 autour de l'axe de révolution B du support superposés les uns sur les autres, de sorte que l'extrémité libre radialement extérieure E1 soit, à l'azimut Az0 de l'extrémité libre radialement extérieure E1, agencée radialement entre la première portion 50 et la deuxième portion 52.

On obtient l'élément de renforcement filaire continu radialement extérieur 40 illustré sur la figure 5. Le procédé selon le premier mode de réalisation satisfait donc la seule condition EI décrite précédemment.

On finit la fabrication du pneumatique en posant sur l'élément de renforcement filaire continu radialement extérieur 40, une troisième masse de composition polymérique destinée à former au moins une partie du bourrelet 32, cette troisième masse de composition polymérique étant destinée à être en contact avec le support de montage du pneumatique 10, par exemple une jante. On forme le sommet 12 en posant successivement l'armature de travail 20, l'armature de frettage 22 et la bande de roulement 14.

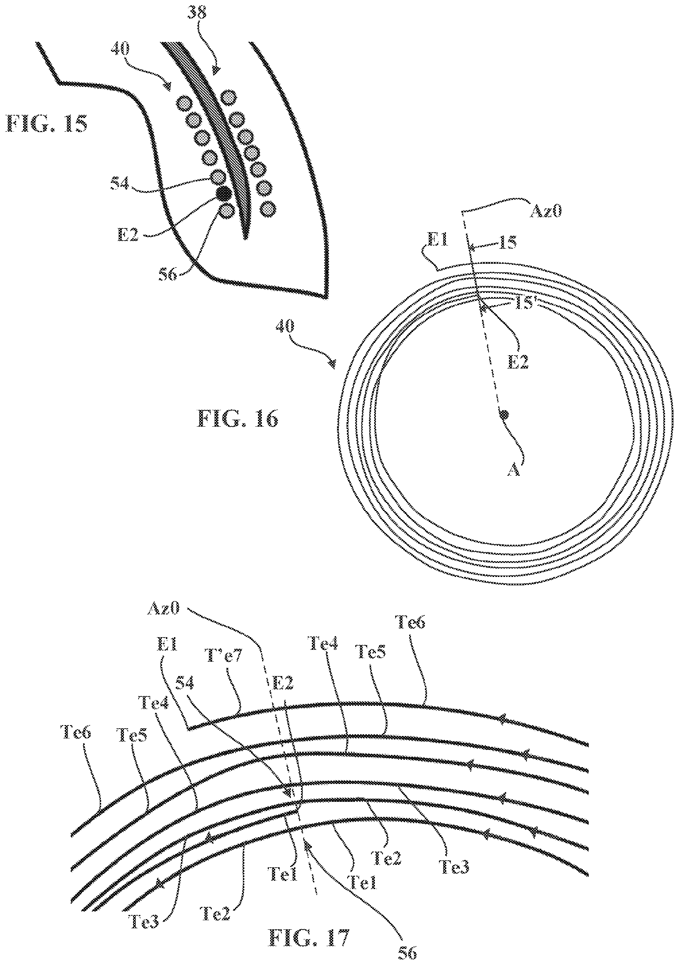

On a illustré sur les figures 15 à 17 un deuxième mode de réalisation de l'invention. Les éléments analogues à ceux illustrés sur les figures précédentes sont désignés par des références identiques.

A la différence du premier mode de réalisation, l'extrémité libre radialement intérieure E2 est ici embarrée. Ainsi, l'extrémité libre radialement intérieure E2 est, à l'azimut Az0 de l'extrémité libre radialement intérieure E2 agencée radialement, entre :
- une première portion 54 de l'élément de renforcement filaire continu 40, cette première portion 54 étant agencée radialement à l'extérieur de l'extrémité libre radialement intérieure E2 et
- une deuxième portion 56 de l'élément de renforcement filaire continu 40, cette deuxième portion 56 étant agencée radialement à l'intérieur de l'extrémité libre radialement intérieure E2.

En l'espèce, l'extrémité libre radialement extérieure E2 est agencée radialement entre la première portion 54 répartie sur les tours circonférentiels complets Te2 et Te3 et la portion 56 répartie sur les tours circonférentiels complets Te1 et Te2.

La première portion 54 et la deuxième portion 56 sont radialement consécutives. La deuxième portion 56 est, à l'azimut Az0 de l'extrémité libre radialement intérieure E2, la portion la plus radialement à l'intérieur de l'élément de renforcement filaire continu 40.

Le pneumatique 10 selon le deuxième mode de réalisation satisfait donc les conditions Il et II" décrites précédemment.

A la différence du procédé selon le premier mode de réalisation, afin de fabriquer le pneumatique selon le deuxième mode de réalisation, on pose l'extrémité libre radialement intérieure E2 directement au contact de la deuxième masse de composition polymérique puis on enroule l'élément de renforcement filaire continu 40 sur les 6 tours circonférentiels complets Te1, Te2, Te3, Te4, Te5, Te6 et sur le tour circonférentiel incomplet T'e7 autour de l'axe de révolution B du support superposés les uns sur les autres, de sorte que l'extrémité libre radialement intérieure E2 soit, à l'azimut Az0 de l'extrémité libre radialement intérieure E2, agencée radialement entre la première portion 54 et la deuxième portion 56.

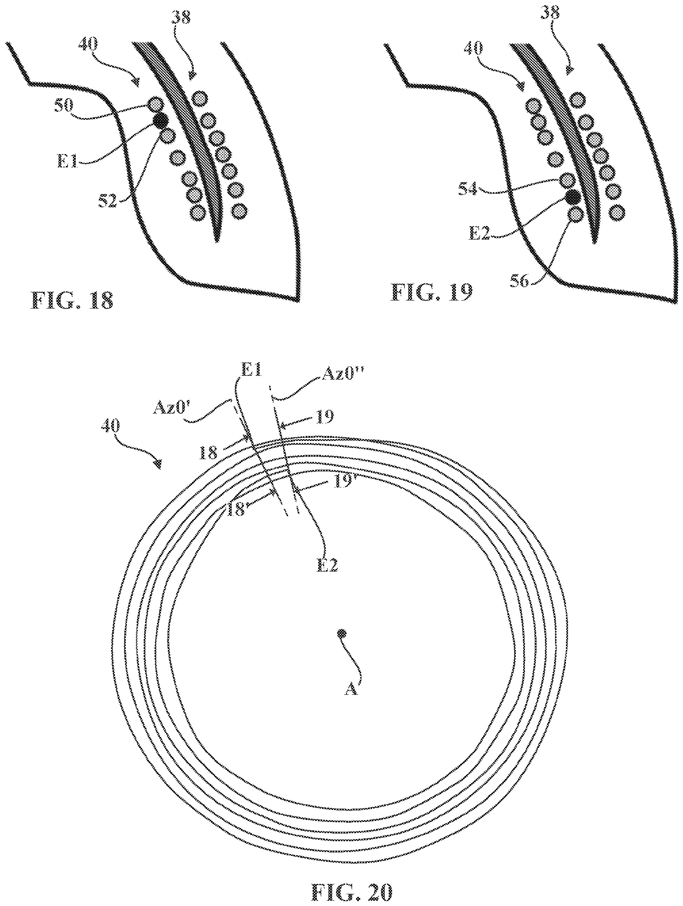

On a illustré sur les figures 18 à 20 un troisième mode de réalisation de l'invention. Les éléments analogues à ceux illustrés sur les figures précédentes sont désignés par des références identiques.

Le troisième mode de réalisation est la combinaison des premier et deuxième modes de réalisation dans lequel chaque extrémité libre radialement intérieure E2 et extérieure E1 est embarrée. Sur la figure 20, on a distingué l'azimut de référence Az0' de l'extrémité libre radialement extérieure E1 de l'azimut de référence Az0" de l'extrémité libre radialement intérieure E2. La figure 18 correspond à la vue en coupe selon le plan de coupe 18-18' de la figure 20 et la figure 19 correspond à la vue en coupe selon le plan de coupe 19-19' de la figure 20.

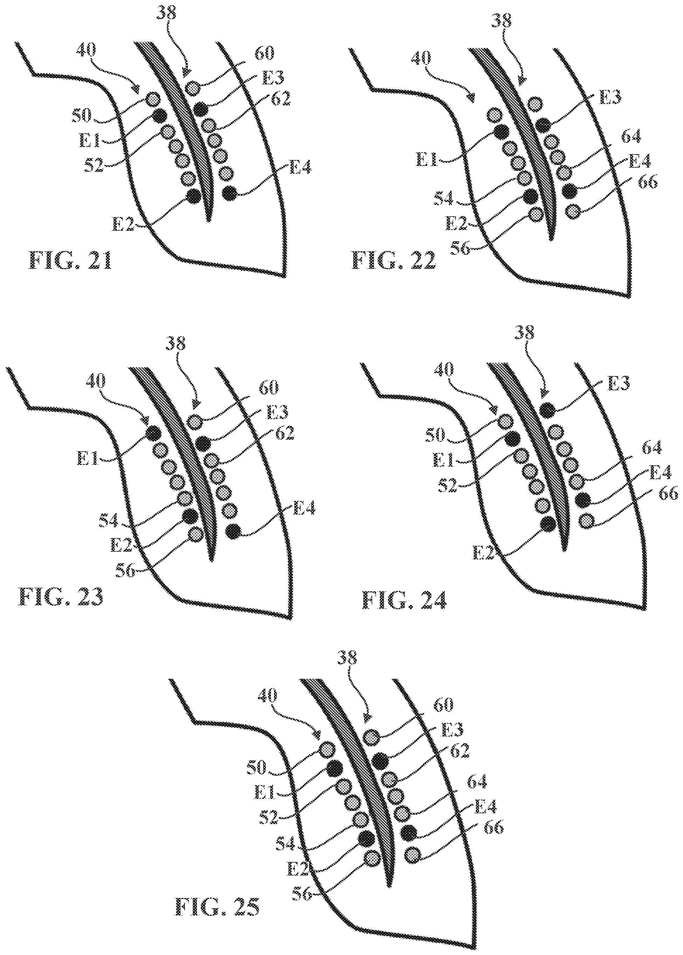

On a illustré sur les figures 21 à 25 d'autres modes de réalisation de l'invention. Les éléments analogues à ceux illustrés sur les figures précédentes sont désignés par des références identiques. Dans les modes de réalisation de ces figures, contrairement aux modes de réalisation précédent et à des fins de simplification de la description, les extrémités libres radialement extérieure E1, E3 et radialement intérieure E2, E4 sont au même azimut Az0. Néanmoins, on pourra très préférentiellement, sans sortir du cadre de l'invention, avoir des extrémités libres radialement extérieure E1, E3 et radialement intérieure E2, E4 à des azimuts différents ou identiques et reproduisant les autres caractéristiques des modes de réalisation décrits aux figures 21 et 25.

On a illustré sur la figure 21 un mode de réalisation dans lequel les seules conditions I, I' et I" sont satisfaites, c'est-à-dire que chaque extrémité libre radialement extérieure E3, E1 respectivement de chaque élément de renforcement filaire continu axialement intérieur 38 et axialement extérieur 40 sont embarrées. Ce mode de réalisation est particulièrement préféré car il permet de supprimer tout risque de fissuration aux extrémités libres radialement extérieures de chaque élément de renforcement filaire continu axialement intérieur 38 et axialement extérieur 40.

En l'espèce, en plus des caractéristiques de l'élément de renforcement filaire continu axialement extérieur 40 décrites dans le premier mode de réalisation, le pneumatique est tel que l'extrémité libre radialement extérieure E3 de l'élément de renforcement filaire continu axialement intérieur 38 est, à l'azimut Az0 de l'extrémité libre radialement extérieure E3, agencée radialement entre :
- une première portion 60 de l'élément de renforcement filaire continu axialement intérieur 38, cette première portion 60 étant agencée radialement à l'extérieur de l'extrémité libre radialement extérieure E3, et
- une deuxième portion 62 de l'élément de renforcement filaire continu axialement intérieur 38, cette deuxième portion 62 étant agencée radialement à l'intérieure de l'extrémité libre radialement extérieure E3.

On a illustré sur la figure 22 un mode de réalisation dans lequel les seules conditions II, II' et II" sont satisfaites, c'est-à-dire que chaque extrémité libre radialement intérieure E4, E2 respectivement de chaque élément de renforcement filaire continu axialement intérieur 38 et axialement extérieur 40 sont embarrées.

En l'espèce, en plus des caractéristiques de l'élément de renforcement filaire continu axialement extérieur 40 décrites dans le deuxième mode de réalisation, le pneumatique est tel que l'extrémité libre radialement intérieure E4 de l'élément de renforcement filaire continu axialement intérieur 38 est, à l'azimut Az0 de l'extrémité libre radialement intérieure E4 agencée radialement, entre :
- une première portion 64 l'élément de renforcement filaire continu axialement intérieur 38, cette première portion 64 étant agencée radialement à l'extérieur de l'extrémité libre radialement intérieure E4, et
- une deuxième portion 66 l'élément de renforcement filaire continu axialement intérieur 38, cette deuxième portion 66 étant agencée radialement à l'intérieur de l'extrémité libre radialement intérieure E4.

On a illustré sur la figure 23 un mode de réalisation dans lequel :
- les conditions I, Il sont satisfaites ensemble pour le pneumatique
- la seule condition I' est satisfaite pour l'élément de renforcement filaire continu axialement intérieur 38, c'est-à-dire que l'extrémité libre radialement extérieure E3 de l'élément de renforcement filaire continu axialement intérieur 38 est embarrée,
- la seule condition II" est satisfaite pour l'élément de renforcement filaire continu axialement extérieur 40, c'est-à-dire que l'extrémité libre radialement intérieure E2 de l'élément de renforcement filaire continu axialement extérieur 40 est embarrée.

On a illustré sur la figure 24 un mode de réalisation dans lequel :
- les conditions I, Il sont satisfaites ensemble pour le pneumatique
- la seule condition II' est satisfaite pour l'élément de renforcement filaire continu axialement intérieur 38, c'est-à-dire que l'extrémité libre radialement intérieure E4 de l'élément de renforcement filaire continu axialement intérieur 38 est embarrée,
- la seule condition I" est satisfaite pour l'élément de renforcement filaire continu axialement extérieur 40, c'est-à-dire que l'extrémité libre radialement extérieure E1 de l'élément de renforcement filaire continu axialement extérieur 40 est embarrée.

On a illustré sur la figure 25 un mode de réalisation issu de la combinaison des modes de réalisation illustrés sur les figures 21 et 22 ou issu de la combinaison des modes de réalisation illustrés sur les figures 23 et 24, c'est-à-dire que :
- les conditions I, Il sont satisfaites ensemble pour le pneumatique
- les conditions I', II' sont satisfaites ensemble pour l'élément de renforcement filaire continu axialement intérieur 38, c'est-à-dire que chaque extrémité libre radialement extérieure E3 et radialement intérieure E4 de l'élément de renforcement filaire continu axialement intérieur 38 est embarrée,
- les conditions I", II" sont satisfaites ensemble pour l'élément de renforcement filaire continu axialement extérieur 40, c'est-à-dire que chaque extrémité libre radialement extérieure E1 et radialement intérieure E2 de l'élément de renforcement filaire continu axialement extérieur 40 est embarrée.

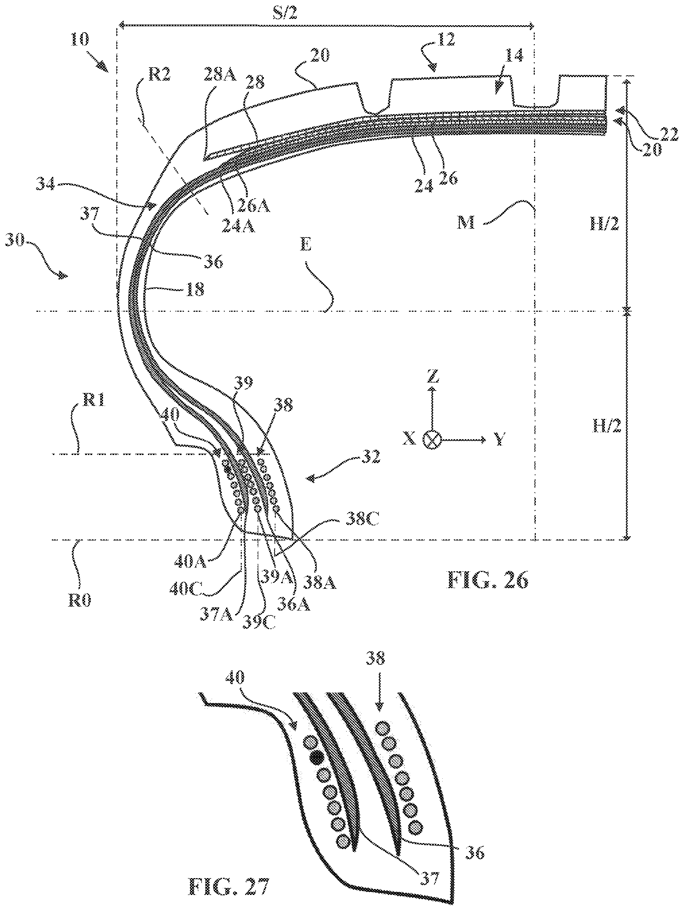

On a illustré sur la figure 26 un quatrième mode de réalisation de l'invention. Les éléments analogues à ceux illustrés sur les figures précédentes sont désignés par des références identiques.

A la différence du premier mode de réalisation, l'armature de carcasse 34 comprend deux couches de carcasse. Ici, l'armature de carcasse 34 comprend une couche de carcasse radialement intérieure 36 et une couche de carcasse radialement extérieure 37 agencée à l'extérieure de la couche de carcasse radialement intérieure 36. La couche de carcasse radialement extérieure 37 est délimitée axialement par deux bords axiaux 37A, 37B. De façon analogue à la couche de carcasse radialement intérieure 36, la couche de carcasse radialement extérieure 37 comprend des éléments de renfort filaires de carcasse s'étendant axialement du bord axial 37A à l'autre bord axial 37B de la couche de carcasse radialement extérieure 37 selon une direction principale formant avec la direction circonférentielle X du pneumatique 10, un angle, en valeur absolue, supérieur ou égal à 60°, de préférence allant de 80° à 90° et ici égal à +90°.

En plus des éléments de renforcement axialement intérieur 38 et axialement extérieur 40, chaque bourrelet 32 comprend un élément de renforcement filaire continu axialement intermédiaire 39 agencé axialement entre l'élément de renforcement filaire continu axialement intérieur 38 et l'élément de renforcement filaire continu axialement extérieur 40. L'élément de renforcement filaire continu axialement intermédiaire 39 comprend une extrémité radialement intérieure 39A. De façon analogue à la figure 3, sur la figure 25, la cote axiale de chaque extrémité radialement intérieure 38A, 39A et 40A est matérialisée par deux droites en traits pointillés 38C, 39C et 40C.

Le bord axial 36A de la couche de carcasse radialement intérieure 36 est agencé axialement entre l'extrémité radialement intérieure 38A de l'élément de renforcement filaire continu axialement intérieur 38 et l'extrémité radialement intérieure 39A de l'élément de renforcement filaire continu axialement intermédiaire 39.

Le bord axial 37A de la couche de carcasse radialement extérieure 37 est agencé axialement entre l'extrémité radialement intérieure 39A de l'élément de renforcement filaire continu axialement intermédiaire 39 et l'extrémité radialement intérieure 40A de l'élément de renforcement filaire continu axialement extérieur 40.

On a illustré sur la figure 26 un cinquième mode de réalisation de l'invention. Les éléments analogues à ceux illustrés sur les figures précédentes sont désignés par des références identiques.

Tout comme dans le quatrième mode de réalisation, le pneumatique 10 comprend deux couches de carcasse 36, 37. Néanmoins, le pneumatique 10 selon le cinquième mode de réalisation ne comprend pas d'élément de renforcement filaire continu axialement intermédiaire 39 agencé axialement entre l'élément de renforcement filaire continu axialement intérieur 38 et l'élément de renforcement filaire continu axialement extérieur 40.

Ainsi, par exemple, bien que cela ne soit pas représenté sur les figures précédentes, on préférera de façon optionnelle que l'azimut de l'extrémité libre radialement extérieure et l'azimut de l'extrémité libre radialement intérieure soient séparées l'une de l'autre d'un écart angulaire compris entre 90° et 180°, par exemple 120°.

## Revendications

1. Pneumatique (10) de forme sensiblement torique autour d'une axe de révolution (A), comprenant un sommet (12), deux flancs (30), deux bourrelets (32), chaque flanc (30) reliant chaque bourrelet (32) au sommet (12), le pneumatique (10) comprenant au moins un élément de renforcement filaire continu (38, 39, 40) comprenant N≥2 tours circonférentiels autour de l'axe de révolution (A) radialement superposés les uns sur les autres, l'élément de renforcement filaire continu (38, 39, 40) comprenant une extrémité libre radialement extérieure (E1, E3) et une extrémité libre radialement intérieure (E2, E4), l'élément de renforcement filaire continu (38, 39, 40) s'étendant radialement au moins en partie dans un des deux bourrelets (32), **caractérisé en ce que** au moins une des conditions I et Il est satisfaite:
I - l'extrémité libre radialement extérieure (E1, E3) est, à l'azimut (AzO; Az0') de l'extrémité libre radialement extérieure (E1, E3), agencée radialement entre :
- au moins une première portion (50, 60) de l'élément de renforcement filaire continu (38, 39, 40), cette première portion (50, 60) étant agencée radialement à l'extérieur de l'extrémité libre radialement extérieure (E1, E3), et
- au moins une deuxième portion (52, 62) de l'élément de renforcement filaire continu (38, 39, 40), cette deuxième portion (52, 62) étant agencée radialement à l'intérieur de l'extrémité libre radialement extérieure (E1, E3),
Il - l'extrémité libre radialement intérieure (E2, E4) est, à l'azimut (AzO; Az0") de l'extrémité libre radialement intérieure (E2, E4) agencée radialement, entre :
- au moins une première portion (54, 64) de l'élément de renforcement filaire continu (38, 39, 40), cette première portion (54, 64) étant agencée radialement à l'extérieur de l'extrémité libre radialement intérieure (E2, E4), et
- au moins une deuxième portion (56, 66) de l'élément de renforcement filaire continu (38, 39, 40), cette deuxième portion (56, 66) étant agencée radialement à l'intérieur de l'extrémité libre radialement intérieure (E2, E4).

2. Pneumatique (10) selon la revendication précédente, dans lequel seule la condition I est satisfaite.

3. Pneumatique (10) selon l'une quelconque des revendications précédentes, dans lequel :
- la première portion (50, 60) de l'élément de renforcement filaire continu (38, 39, 40) agencée radialement à l'extérieur de l'extrémité libre radialement extérieure (E1, E3) et la deuxième portion (52, 62) de l'élément de renforcement filaire continu (38, 39, 40) agencée radialement à l'intérieur de l'extrémité libre radialement extérieure (E1, E3) sont radialement consécutives,
- la première portion (54, 64) de l'élément de renforcement filaire continu (38, 39, 40) agencée radialement à l'extérieure de l'extrémité libre radialement intérieure (E2, E4) et la deuxième portion (56, 66) de l'élément de renforcement filaire continu (38, 39, 40) agencée radialement à l'intérieur de l'extrémité libre radialement intérieure (E2, E4) sont radialement consécutives.

4. Pneumatique (10) selon l'une quelconque des revendications précédentes, dans lequel:
- la première portion (50, 60) de l'élément de renforcement filaire continu (38, 39, 40) agencée radialement à l'extérieure de l'extrémité libre radialement extérieure (E1, E3) est, à l'azimut (AzO; Az0') de l'extrémité libre radialement extérieure (E1, E3), la portion la plus radialement à l'extérieur de l'élément de renforcement filaire continu (38, 39, 40),
- la deuxième portion (56, 66) de l'élément de renforcement filaire continu (38, 39, 40) agencée radialement à l'intérieur de l'extrémité libre radialement intérieure (E2, E4), est à l'azimut (AzO; Az0") de l'extrémité libre radialement intérieure (E2, E4), la portion la plus radialement à l'intérieur de l'élément de renforcement filaire continu (38, 39, 40).

5. Pneumatique (10) selon l'une quelconque des revendications précédentes, dans lequel, l'élément de renforcement filaire continu (38, 39, 40) s'étend radialement intégralement dans le bourrelet (32).

6. Pneumatique (10) selon l'une quelconque des revendications précédentes, comprenant une armature de carcasse (34) ancrée dans chaque bourrelet (32) et s'étendant dans chaque flanc (30) et radialement intérieurement au sommet (12).

7. Pneumatique (10) selon la revendication précédente, dans lequel l'élément de renforcement filaire continu (38, 39, 40) est agencé axialement à l'extérieur de l'armature de carcasse (34).

8. Pneumatique (10) selon la revendication 6 ou 7, dans lequel chaque bourrelet (32) comprend:
- un élément de renforcement filaire continu axialement intérieur (38) agencé axialement à l'intérieur de l'armature de carcasse (34),
- un élément de renforcement filaire continu axialement extérieur (40) agencé axialement à l'extérieur de l'armature de carcasse (34).

9. Pneumatique (10) selon la revendication précédente, dans lequel, l'armature de carcasse (34) comprenant au moins une couche de carcasse (36, 37), la ou chaque couche de carcasse (36, 37) étant délimitée axialement par deux bords axiaux (36A, 36B, 37A, 37B), chaque bord axial est agencé axialement entre l'extrémité radialement intérieure (38A) de élément de renforcement filaire continu axialement intérieur (38) et l'extrémité radialement intérieure (40A) de l'élément de renforcement filaire continu axialement extérieur (40).

10. Pneumatique (10) selon la revendication 8 ou 9, dans lequel l'élément de renforcement filaire continu axialement extérieur (40) comprend Ne≥2 tours circonférentiels autour de l'axe de révolution (A) radialement superposés les uns sur les autres, l'élément de renforcement filaire axialement extérieur (40) comprenant une extrémité libre radialement extérieure (E1) et une extrémité libre radialement intérieure (E2), au moins une des conditions I", II" suivantes est satisfaite:
I" - l'extrémité libre radialement extérieure (E1) de l'élément de renforcement filaire continu axialement extérieur (40) est, à l'azimut (AzO; Az0') de l'extrémité libre radialement extérieure (E1), agencée radialement entre :
- au moins une première portion (50) de l'élément de renforcement filaire continu axialement extérieur (40), cette première portion (50) étant agencée radialement à l'extérieur de l'extrémité libre radialement extérieure (E1), et
- au moins une deuxième portion (52) de l'élément de renforcement filaire continu axialement extérieur (40), cette deuxième portion (52) étant agencée radialement à l'intérieure de l'extrémité libre radialement extérieure (E1),
II" - l'extrémité libre radialement intérieure (E2) de l'élément de renforcement filaire continu axialement extérieur (40) est, à l'azimut (AzO; Az0") de l'extrémité libre radialement intérieure (E2) agencée radialement, entre :
- au moins une première portion (54) de l'élément de renforcement filaire continu axialement extérieur (40), cette première portion (54) étant agencée radialement à l'extérieur de l'extrémité libre radialement intérieure (E2) et
- au moins une deuxième portion (56) de l'élément de renforcement filaire continu axialement extérieur (40), cette deuxième portion (56) étant agencée radialement à l'intérieur de l'extrémité libre radialement intérieure (E2).

11. Pneumatique (10) selon l'une quelconque des revendications précédentes, dans lequel l'armature de carcasse (34) comprend au moins une couche de carcasse (36, 37), la ou chaque couche de carcasse (36, 37) comprenant des éléments de renfort filaires de carcasse (360), chaque élément de renfort filaire de carcasse (360) s'étendant sensiblement selon une direction principale (D3) formant avec la direction circonférentielle (X) du pneumatique (10), un angle (AC), en valeur absolue, supérieur ou égal à 60°, de préférence allant de 80° à 90°.

12. Pneumatique (10) selon l'une quelconque des revendications précédentes, dans lequel le sommet (12) comprend :
- une bande de roulement (14) destinée à venir en contact avec un sol lors du roulage du pneumatique (10),
- une armature de sommet (16) agencée radialement entre la bande de roulement (14) et l'armature de carcasse (34).

13. Pneumatique (10) selon la revendication précédente, dans lequel l'armature de sommet (16) comprenant une armature de travail (20) comprenant au moins une couche de travail (24, 26), la ou chaque couche de travail (24, 26) comprenant des éléments de renfort filaires de travail (240, 260), chaque élément de renfort filaire de travail (240, 260) s'étendant selon une direction principale (D1, D2) formant avec la direction circonférentielle (X) du pneumatique (10), un angle (AT1, AT2), en valeur absolue, strictement supérieur à 10°, de préférence allant, de 15° à 50° et plus préférentiellement de 25° à 45°.

14. Pneumatique (10) selon la revendication 12 ou 13, dans lequel l'armature de sommet (16) comprend une armature de frettage (22) comprenant au moins une couche de frettage (28), la ou chaque couche de frettage (28) comprenant au moins un élément de renfort filaire de frettage (280) enroulé circonférentiellement hélicoïdalement selon une direction principale (D0) du ou de chaque élément de renfort filaire de frettage (280) formant avec la direction circonférentielle (X) du pneumatique (10), un angle (AF), en valeur absolue, inférieur ou égal à 10°, de préférence inférieur ou égal à 7° et plus préférentiellement inférieur ou égal à 5°.

15. Procédé de fabrication d'un pneumatique (10) selon l'une quelconque des revendications précédentes, dans lequel :
- on pose une masse de composition polymérique sur un support sensiblement de révolution autour d'un axe de révolution (B) du support, la masse de composition polymérique étant destinée à former au moins une partie d'au moins un des bourrelets (32), puis,
- on réalise l'une ou l'autre des étapes EI et EII suivantes :
EI - on pose l'extrémité libre radialement extérieure (E1, E3) directement au contact de la masse de la composition polymérique puis on enroule l'élément de renforcement filaire continu (38, 39, 40) sur N≥2 tours circonférentiels autour de l'axe de révolution (B) du support, superposés les uns sur les autres, de sorte que l'extrémité libre radialement extérieure (E1, E3) soit, à l'azimut (AzO; Az0') de l'extrémité libre radialement extérieure (E1, E3), agencée radialement entre :
- au moins la première portion (50, 60) de l'élément de renforcement filaire continu (38, 39, 40) agencée radialement à l'extérieur de l'extrémité libre radialement extérieure (E1, E3), et
- au moins la deuxième portion (52, 62) de l'élément de renforcement filaire continu (38, 39, 40) agencée radialement à l'intérieure de l'extrémité libre radialement extérieure (E1, E3),
EII - on pose l'extrémité libre radialement intérieure (E2, E4) directement au contact de la masse de la composition polymérique puis on enroule l'élément de renforcement filaire continu (38, 39, 40) sur N≥2 tours circonférentiels autour de l'axe de révolution (B) du support superposés les uns sur les autres, de sorte que l'extrémité libre radialement intérieure (E2, E4) soit, à l'azimut (AzO; Az0") de l'extrémité libre radialement intérieure (E2, E4) agencée radialement entre :
- au moins la première portion (54, 64) de l'élément de renforcement filaire continu (38, 39, 40) agencée radialement à l'extérieur de l'extrémité libre radialement intérieure (E2, E4), et
- au moins la deuxième portion (56, 66) de l'élément de renforcement filaire continu (38, 39, 40) agencée radialement à l'intérieur de l'extrémité libre radialement intérieure (E2, E4).

## Patentansprüche

1. Reifen (10) mit im Wesentlichen torischer Form um eine Drehachse (A), umfassend einen Scheitel (12), zwei Flanken (30) und zwei Wülste (32), wobei jede Flanke (30) jede Wulst (32) mit dem Scheitel (12) verbindet, wobei der Reifen (10) mindestens ein kontinuierliches drahtförmiges Verstärkungselement (38, 39, 40) umfasst, das N ≥ 2 Umfangswindungen um die Drehachse (A) umfasst, die radial übereinander angeordnet sind, wobei das kontinuierliche drahtförmige Verstärkungselement (38, 39, 40) ein radial äußeres freies Ende (E1, E3) und ein radial inneres freies Ende (E2, E4) umfasst, wobei sich das kontinuierliche drahtförmige Verstärkungselement (38, 39, 40) zumindest teilweise radial in einer der beiden Wülste (32) erstreckt, **dadurch gekennzeichnet, dass** mindestens eine der Bedingungen I und II erfüllt ist:
I - das radial äußere freie Ende (E1, E3) ist im Azimut (AzO; Az0') des radial äußeren freien Endes (E1, E3) radial angeordnet zwischen:
- mindestens einem ersten Abschnitt (50, 60) des kontinuierlichen drahtförmigen Verstärkungselements (38, 39, 40), wobei dieser erste Abschnitt (50, 60) radial außerhalb des radial äußeren freien Endes (E1, E3) angeordnet ist, und
- mindestens einem zweiten Abschnitt (52, 62) des kontinuierlichen drahtförmigen Verstärkungselements (38, 39, 40), wobei dieser zweite Abschnitt (52, 62) radial innerhalb des radial äußeren freien Endes (E1, E3) angeordnet ist,
II - das radial innere freie Ende (E2, E4) ist im Azimut (AzO; Az0") des radial inneren freien Endes (E2, E4) radial angeordnet zwischen:
- mindestens einem ersten Abschnitt (54, 64) des kontinuierlichen drahtförmigen Verstärkungselements (38, 39, 40), wobei dieser erste Abschnitt (54, 64) radial außerhalb des radial inneren freien Endes (E2, E4) angeordnet ist, und
- mindestens einem zweiten Abschnitt (56, 66) des kontinuierlichen drahtförmigen Verstärkungselements (38, 39, 40), wobei dieser zweite Abschnitt (56, 66) radial innerhalb des radial inneren freien Endes (E2, E4) angeordnet ist.

2. Reifen (10) nach dem vorangehenden Anspruch, wobei lediglich die Bedingung I erfüllt ist.

3. Reifen (10) nach einem der vorangehenden Ansprüche, wobei:
- der erste Abschnitt (50, 60) des kontinuierlichen drahtförmigen Verstärkungselements (38, 39, 40), der radial außerhalb des radial äußeren freien Endes (E1, E3) angeordnet ist, und der zweite Abschnitt (52, 62) des kontinuierlichen drahtförmigen Verstärkungselements (38, 39, 40), der radial innerhalb des radial äußeren freien Endes (E1, E3) angeordnet, radial aufeinanderfolgen,
- der erste Abschnitt (54, 64) des kontinuierlichen drahtförmigen Verstärkungselements (38, 39, 40), der radial außerhalb des radial inneren freien Endes (E2, E4) angeordnet ist, und der zweite Abschnitt (56, 66) des kontinuierlichen drahtförmigen Verstärkungselements (38, 39, 40), der radial innerhalb des radial inneren freien Endes (E2, E4) angeordnet ist, radial aufeinanderfolgen.

4. Reifen (10) nach einem der vorangehenden Ansprüche, wobei:
- der erste Abschnitt (50, 60) des kontinuierlichen drahtförmigen Verstärkungselements (38, 39, 40), der radial außerhalb des radial äußeren freien Endes (E1, E3) angeordnet ist, im Azimut (AzO; Az0') des radial äußeren freien Endes (E1, E3) der radial äußerste Abschnitt des kontinuierlichen drahtförmigen Verstärkungselements (38, 39, 40) ist,
- der zweite Abschnitt (56, 66) des kontinuierlichen drahtförmigen Verstärkungselements (38, 39, 40), der radial innerhalb des radial inneren freien Endes (E2, E4) angeordnet ist, im Azimut (AzO; Az0") des radial inneren freien Endes (E2, E4) der radial innerste Abschnitt des kontinuierlichen drahtförmigen Verstärkungselements (38, 39, 40) ist.

5. Reifen (10) nach einem der vorangehenden Ansprüche, wobei sich das kontinuierliche drahtförmige Verstärkungselement (38, 39, 40) radial vollständig in der Wulst (32) erstreckt.

6. Reifen (10) nach einem der vorangehenden Ansprüche, umfassend eine Karkassenbewehrung (34), die in jeder Wulst (32) verankert ist und sich in jeder Flanke (30) und radial innerhalb des Scheitels (12) erstreckt.

7. Reifen (10) nach dem vorangehenden Anspruch, wobei das kontinuierliche drahtförmige Verstärkungselement (38, 39, 40) axial außerhalb der Karkassenbewehrung (34) angeordnet ist.

8. Reifen (10) nach Anspruch 6 oder 7, wobei jede Wulst (32) Folgendes umfasst:
- ein axial inneres kontinuierliches drahtförmiges Verstärkungselement (38), das axial innerhalb der Karkassenbewehrung (34) angeordnet ist,
- ein axial äußeres kontinuierliches drahtförmiges Verstärkungselement (40), das axial außerhalb der Karkassenbewehrung (34) angeordnet ist.

9. Reifen (10) nach dem vorangehenden Anspruch, wobei die Karkassenbewehrung (34) mindestens eine Karkassenlage (36, 37) umfasst, wobei die bzw. jede Karkassenlage (36, 37) axial durch zwei axiale Kanten (36A, 36B, 37A, 37B) begrenzt ist, wobei jede axiale Kante axial zwischen dem radial inneren Ende (38A) des axial inneren kontinuierlichen drahtförmigen Verstärkungselements (38) und dem radial inneren Ende (40A) des axial äußeren kontinuierlichen drahtförmigen Verstärkungselements (40) angeordnet ist.

10. Reifen (10) nach Anspruch 8 oder 9, wobei das axial äußere kontinuierliche drahtförmige Verstärkungselement (40) Ne ≥ 2 Umfangswindungen um die Drehachse (A) umfasst, die radial übereinander angeordnet sind, wobei das axial äußere drahtförmige Verstärkungselement (40) ein radial äußeres freies Ende (E1) und ein radial inneres freies Ende (E2) umfasst, wobei mindestens eine der folgenden Bedingungen I", II" erfüllt ist:
I" - das radial äußere freie Ende (E1) des axial äußeren kontinuierlichen drahtförmigen Verstärkungselements (40) ist im Azimut (AzO; Az0') des radial äußeren freien Endes (E1) radial angeordnet zwischen:
- mindestens einem ersten Abschnitt (50) des axial äußeren kontinuierlichen drahtförmigen Verstärkungselements (40), wobei dieser erste Abschnitt (50) radial außerhalb des radial äußeren freien Endes (E1) angeordnet ist, und
- mindestens einem zweiten Abschnitt (52) des axial äußeren kontinuierlichen drahtförmigen Verstärkungselements (40), wobei dieser zweite Abschnitt (52) radial innerhalb des radial äußeren freien Endes (E1) angeordnet ist,
II" - das radial innere freie Ende (E2) des axial äußeren kontinuierlichen drahtförmigen Verstärkungselements (40) ist im Azimut (AzO; Az0") des radial inneren freien Endes (E2) radial angeordnet zwischen:
- mindestens einem ersten Abschnitt (54) des axial äußeren kontinuierlichen drahtförmigen Verstärkungselements (40), wobei dieser erste Abschnitt (54) radial außerhalb des radial inneren freien Endes (E2) angeordnet ist, und
- mindestens einem zweiten Abschnitt (56) des axial äußeren kontinuierlichen drahtförmigen Verstärkungselements (40), wobei dieser zweite Abschnitt (56) radial innerhalb des radial inneren freien Endes (E2) angeordnet ist.

11. Reifen (10) nach einem der vorangehenden Ansprüche, wobei die Karkassenbewehrung (34) mindestens eine Karkassenlage (36, 37) umfasst, wobei die bzw. jede Karkassenlage (36, 37) drahtförmige Karkassenverstärkungselemente (360) umfasst, wobei sich jedes drahtförmige Karkassenverstärkungselement (360) im Wesentlichen in einer Hauptrichtung (D3) erstreckt, die mit der Umfangsrichtung (X) des Reifens (10) einen Winkel (AC) bildet, dessen Absolutwert 60° oder mehr beträgt und vorzugsweise von 80° bis 90° reicht.

12. Reifen (10) nach einem der vorangehenden Ansprüche, wobei der Scheitel (12) Folgendes umfasst:
- einen Laufstreifen (14), der dazu bestimmt ist, beim Rollen des Reifens (10) mit einem Boden in Kontakt zu treten,
- eine Scheitelbewehrung (16), die radial zwischen dem Laufstreifen (14) und der Karkassenbewehrung (34) angeordnet ist.

13. Reifen (10) nach dem vorangehenden Anspruch, wobei die Scheitelbewehrung (16) eine Arbeitsbewehrung (20) umfasst, die mindestens eine Arbeitslage (24, 26) umfasst, wobei die bzw. jede Arbeitslage (24, 26) drahtförmige Arbeitsverstärkungselemente (240, 260) umfasst, wobei sich jedes drahtförmige Arbeitsverstärkungselement (240, 260) in einer Hauptrichtung (D1, D2) erstreckt, die mit der Umfangsrichtung (X) des Reifens (10) einen Winkel (AT1, AT2) bildet, dessen Absolutwert strikt über 10° liegt, vorzugsweise von 15° bis 50° und besonders vorzugsweise von 25° bis 45° reicht.

14. Reifen (10) nach Anspruch 12 oder 13, wobei die Scheitelbewehrung (16) eine Schrumpfbewehrung (22) umfasst, die mindestens eine Schrumpflage (28) umfasst, wobei die bzw. jede Schrumpflage (28) mindestens ein drahtförmiges Schrumpfverstärkungselement (280) umfasst, das in Umfangsrichtung entlang einer Hauptrichtung (D0) des bzw. jedes drahtförmigen Schrumpfverstärkungselements (280) schraubenförmig gewickelt ist, das mit der Umfangsrichtung (X) des Reifens (10) einen Winkel (AF) bildet, dessen Absolutwert 10° oder weniger, vorzugsweise 7° oder weniger und besonders vorzugsweise 5° oder weniger beträgt.

15. Verfahren zur Herstellung eines Reifens (10) nach einem der vorangehenden Ansprüche, wobei:
- eine Masse aus einer polymeren Zusammensetzung auf einem Träger aufgebracht wird, der im Wesentlichen um eine Drehachse (B) des Trägers drehbar ist, wobei die Masse aus der polymeren Zusammensetzung dazu bestimmt ist, zumindest einen Teil mindestens einer der Wülste (32) auszubilden, und anschließend
- der eine oder der andere der folgenden Schritte EI und EII durchgeführt wird:
EI - das radial äußere freie Ende (E1, E3) wird in direktem Kontakt auf die Masse aus der polymeren Zusammensetzung aufgebracht und anschließend wird das kontinuierliche drahtförmige Verstärkungselement (38, 39, 40) über N ≥ 2 übereinanderliegende Umfangswindungen um die Drehachse (B) des Trägers gewickelt, sodass das radial äußere freie Ende (E1, E3) im Azimut (AzO; Az0') des radial äußeren freien Endes (E1, E3) radial angeordnet ist zwischen:
- zumindest dem ersten Abschnitt (50, 60) des kontinuierlichen drahtförmigen Verstärkungselements (38, 39, 40), der radial außerhalb des radial äußeren freien Endes (E1, E3) angeordnet ist, und
- zumindest dem zweiten Abschnitt (52, 62) des kontinuierlichen drahtförmigen Verstärkungselements (38, 39, 40), der radial innerhalb des radial äußeren freien Endes (E1, E3) angeordnet ist,
EII - das radial innere freie Ende (E2, E4) wird in direktem Kontakt auf die Masse aus der polymeren Zusammensetzung aufgebracht und anschließend wird das kontinuierliche drahtförmige Verstärkungselement (38, 39, 40) über N ≥ 2 übereinanderliegende Umfangswindungen um die Drehachse (B) des Trägers gewickelt, sodass das radial innere freie Ende (E2, E4) im Azimut (AzO; Az0") des radial inneren freien Endes (E2, E4) radial angeordnet ist zwischen:
- zumindest dem ersten Abschnitt (54, 64) des kontinuierlichen drahtförmigen Verstärkungselements (38, 39, 40), der radial außerhalb des radial inneren freien Endes (E2, E4) angeordnet ist, und
- zumindest dem zweiten Abschnitt (56, 66) des kontinuierlichen drahtförmigen Verstärkungselements (38, 39, 40), der radial innerhalb des radial inneren freien Endes (E2, E4) angeordnet ist.

## Claims

1. Tyre (10) of substantially toric shape about an axis of revolution (A), comprising a crown (12), two sidewalls (30) and two beads (32), each sidewall (30) connecting each bead (32) to the crown (12), the tyre (10) comprising at least one continuous filamentary reinforcing element (38, 39, 40) comprising N≥2 circumferential turns about the axis of revolution (A) which are radially superposed on one another, the continuous filamentary reinforcing element (38, 39, 40) comprising a radially outer free end (E1, E3) and a radially inner free end (E2, E4), the continuous filamentary reinforcing element (38, 39, 40) extending radially at least in part in one of the two beads (32), **characterized in that** at least one of conditions I and II is satisfied:
I - the radially outer free end (E1, E3) is, at the azimuth (AzO; Az0') of the radially outer free end (E1, E3), arranged radially between:
- at least one first portion (50, 60) of the continuous filamentary reinforcing element (38, 39, 40), this first portion (50, 60) being arranged radially on the outside of the radially outer free end (E1, E3), and
- at least one second portion (52, 62) of the continuous filamentary reinforcing element (38, 39, 40), this second portion (52, 62) being arranged radially on the inside of the radially outer free end (E1, E3),
II - the radially inner free end (E2, E4) is, at the azimuth (AzO; Az0") of the radially inner free end (E2, E4), arranged radially between:
- at least one first portion (54, 64) of the continuous filamentary reinforcing element (38, 39, 40), this first portion (54, 64) being arranged radially on the outside of the radially inner free end (E2, E4), and
- at least one second portion (56, 66) of the continuous filamentary reinforcing element (38, 39, 40), this second portion (56, 66) being arranged radially on the inside of the radially inner free end (E2, E4).

2. Tyre (10) according to the preceding claim, wherein only condition I is satisfied.

3. Tyre (10) according to any one of the preceding claims, wherein:
- the first portion (50, 60) of the continuous filamentary reinforcing element (38, 39, 40) arranged radially on the outside of the radially outer free end (E1, E3) and the second portion (52, 62) of the continuous filamentary reinforcing element (38, 39, 40) arranged radially on the inside of the radially outer free end (E1, E3) are radially consecutive,
- the first portion (54, 64) of the continuous filamentary reinforcing element (38, 39, 40) arranged radially on the outside of the radially inner free end (E2, E4) and the second portion (56, 66) of the continuous filamentary reinforcing element (38, 39, 40) arranged radially on the inside of the radially inner free end (E2, E4) are radially consecutive.

4. Tyre (10) according to any one of the preceding claims, wherein:
- the first portion (50, 60) of the continuous filamentary reinforcing element (38, 39, 40) arranged radially on the outside of the radially outer free end (E1, E3) is, at the azimuth (AzO; Az0') of the radially outer free end (E1, E3), the radially outermost portion of the continuous filamentary reinforcing element (38, 39, 40),
- the second portion (56, 66) of the continuous filamentary reinforcing element (38, 39, 40) arranged radially on the inside of the radially inner free end (E2, E4) is, at the azimuth (AzO; Az0") of the radially inner free end (E2, E4), the radially innermost portion of the continuous filamentary reinforcing element (38, 39, 40).

5. Tyre (10) according to any one of the preceding claims, wherein the continuous filamentary reinforcing element (38, 39, 40) extends radially entirely in the bead (32).

6. Tyre (10) according to any one of the preceding claims, comprising a carcass reinforcement (34) that is anchored in each bead (32) and extends in each sidewall (30) and radially on the inside of the crown (12).

7. Tyre (10) according to the preceding claim, wherein the continuous filamentary reinforcing element (38, 39, 40) is arranged axially on the outside of the carcass reinforcement (34).

8. Tyre (10) according to Claim 6 or 7, wherein each bead (32) comprises:
- an axially inner continuous filamentary reinforcing element (38) arranged axially on the inside of the carcass reinforcement (34),
- an axially outer continuous filamentary reinforcing element (40) arranged axially on the outside of the carcass reinforcement (34).

9. Tyre (10) according to the preceding claim, wherein, with the carcass reinforcement (34) comprising at least one carcass layer (36, 37), the or each carcass layer (36, 37) being delimited axially by two axial edges (36A, 36B, 37A, 37B), each axial edge is arranged axially between the radially inner end (38A) of the axially inner continuous filamentary reinforcing element (38) and the radially inner end (40A) of the axially outer continuous filamentary reinforcing element (40).

10. Tyre (10) according to Claim 8 or 9, wherein the axially outer continuous filamentary reinforcing element (40) comprises Ne≥2 circumferential turns about the axis of revolution (A) which are radially superposed on one another, with the axially outer filamentary reinforcing element (40) comprising a radially outer free end (E1) and a radially inner free end (E2), at least one of the following conditions I", II" is satisfied:
I" - the radially outer free end (E1) of the axially outer continuous filamentary reinforcing element (40) is, at the azimuth (AzO; Az0') of the radially outer free end (E1), arranged radially between:
- at least one first portion (50) of the axially outer continuous filamentary reinforcing element (40), this first portion (50) being arranged radially on the outside of the radially outer free end (E1), and
- at least one second portion (52) of the axially outer continuous filamentary reinforcing element (40), this second portion (52) being arranged radially on the inside of the radially outer free end (E1),
II" - the radially inner free end (E2) of the axially outer continuous filamentary reinforcing element (40) is, at the azimuth (AzO; Az0") of the radially inner free end (E2), arranged radially between:
- at least one first portion (54) of the axially outer continuous filamentary reinforcing element (40), this first portion (54) being arranged radially on the outside of the radially inner free end (E2), and
- at least one second portion (56) of the axially outer continuous filamentary reinforcing element (40), this second portion (56) being arranged radially on the inside of the radially inner free end (E2).

11. Tyre (10) according to any one of the preceding claims, wherein the carcass reinforcement (34) comprises at least one carcass layer (36, 37), the or each carcass layer (36, 37) comprising carcass filamentary reinforcing elements (360), each carcass filamentary reinforcing element (360) extending substantially along a main direction (D3) that forms an angle (AC), in terms of absolute value, greater than or equal to 60°, preferably ranging from 80° to 90°, with the circumferential direction (X) of the tyre (10).

12. Tyre (10) according to any one of the preceding claims, wherein the crown (12) comprises:
- a tread (14) intended to come into contact with the ground when the tyre (10) is running,
- a crown reinforcement (16) arranged radially between the tread (14) and the carcass reinforcement (34).

13. Tyre (10) according to the preceding claim, wherein the crown reinforcement (16) comprises a working reinforcement (20) comprising at least one working layer (24, 26), the or each working layer (24, 26) comprising working filamentary reinforcing elements (240, 260), each working filamentary reinforcing element (240, 260) extending along a main direction (D1, D2) that forms an angle (AT1, AT2), in terms of absolute value, strictly greater than 10°, preferably ranging from 15° to 50° and more preferably from 25° to 45°, with the circumferential direction (X) of the tyre (10).

14. Tyre (10) according to Claim 12 or 13, wherein the crown reinforcement (16) comprises a hoop reinforcement (22) comprising at least one hooping layer (28), the or each hooping layer (28) comprising at least one hooping filamentary reinforcing element (280) wound circumferentially in a helix along a main direction (D0) of the or of each hooping filamentary reinforcing element (280) that forms an angle (AF), in terms of absolute value, less than or equal to 10°, preferably less than or equal to 7° and more preferably less than or equal to 5°, with the circumferential direction (X) of the tyre (10).

15. Method for manufacturing a tyre (10) according to any one of the preceding claims, in which:
- a mass of polymer composition is placed on a support substantially exhibiting symmetry of revolution about an axis of revolution (B) of the support, the mass of polymer composition being intended to form at least a part of at least one of the beads (32), then
- one or the other of the following steps EI and EII is carried out:
EI - the radially outer free end (E1, E3) is placed directly in contact with the mass of polymer composition and then the continuous filamentary reinforcing element (38, 39, 40) is wound through N≥2 circumferential turns about the axis of revolution (B) of the support, which are superposed on one another, such that the radially outer free end (E1, E3) is, at the azimuth (AzO; Az0') of the radially outer free end (E1, E3), arranged radially between:
- at least the first portion (50, 60) of the continuous filamentary reinforcing element (38, 39, 40), which is arranged radially on the outside of the radially outer free end (E1, E3), and
- at least the second portion (52, 62) of the continuous filamentary reinforcing element (38, 39, 40), which is arranged radially on the inside of the radially outer free end (E1, E3),
EII - the radially inner free end (E2, E4) is placed directly in contact with the mass of polymer composition and then the continuous filamentary reinforcing element (38, 39, 40) is wound through N≥2 circumferential turns about the axis of revolution (B) of the support, which are superposed on one another, such that the radially inner free end (E2, E4) is, at the azimuth (AzO; Az0") of the radially inner free end (E2, E4), arranged radially between:
- at least the first portion (54, 64) of the continuous filamentary reinforcing element (38, 39, 40), which is arranged radially on the outside of the radially inner free end (E2, E4), and
- at least the second portion (56, 66) of the continuous filamentary reinforcing element (38, 39, 40), which is arranged radially on the inside of the radially inner free end (E2, E4).
